# EUROPEAN PATENT APPLICATION

(11) **EP 4 755 232 A1**
(43) Date of publication of application: **10.06.2026**
(21) Application number: 24849467.6
(22) Date of filing: 24.07.2024
(51) Int. Cl.: A24F 40/95, A24F 40/53, A24F 40/46, A24F 40/40, A24F 40/50, A24F 40/60, A24F 40/90

(54) **AEROSOL-GENERATING DEVICE**

(30) Priority: 31.07.2023 KR 20230099861; 27.09.2023 KR 20230130947
(71) Applicant: KT&G Corporation, Daedeok-gu Daejeon 34337 (KR)
(72) Inventor: PARK, Ju Eon, Seongnam-si, Gyeonggi-do 13597 (KR); KIM, Tae Hun, Yongin-si, Gyeonggi-do 16925 (KR); SHIN, Youn Ji, Seoul 05022 (KR); LIM, Hun Il, Seoul 05555 (KR); JUNG, Hyung Jin, Seoul 06993 (KR)
(74) Representative: AWA Sweden AB
(86) International application number: PCT/KR2024/010759
(87) International publication number: WO 2025/028898

(57) **Abstract**

An aerosol-generating device includes a battery pack including a battery supplying power for an operation of the aerosol-generating device and a battery terminal electrically connected to the battery, an aerosol-generating device main body including a battery accommodation portion accommodating the battery pack and a main body terminal electrically connected to the battery terminal, and to which the battery pack is separably coupled, and a connector electrically connecting the battery terminal to the main body terminal.

## Description

### Technical Field

Embodiments relate to an aerosol-generating device, and more particularly, to an aerosol-generating device with a structure capable of separably coupling a battery pack to an aerosol-generating device main body.

### Background Art

Recently, there has been an increasing demand for an alternative method of overcoming disadvantages of general cigarettes. For example, there has been an increasing demand for a system that generates an aerosol by heating a cigarette (or "an aerosol-generating article") by using an aerosol-generating device, other than a method of generating an aerosol by burning the cigarette.

An aerosol-generating device may include a battery supplying power for operations of components (e.g., a heater, a display, etc.) of the aerosol-generating device. In general, because a battery is embedded inside an aerosol-generating device main body, the aerosol-generating device is used in a structure in which the battery is not easily separated from the aerosol-generating device main body. However, recently, research has been conducted on an aerosol-generating device with a structure capable of separably coupling a battery to an aerosol-generating device main body.

### Disclosure of Invention

### Technical Problem

Embodiments provide an aerosol-generating device with a structure capable of separably coupling a battery to an aerosol-generating device main body.

Embodiments also provide an aerosol-generating device capable of improving coupling forces of terminals for electrical connection between a battery and an aerosol-generating device main body.

The technical problems of the present disclosure are not limited to the aforementioned description, and other technical problems may be clearly understood by one of ordinary skill in the art from the present specification and the attached drawings.

### Solution to Problem

According to an embodiment, an aerosol-generating device includes a battery pack including a battery configured to supply power for an operation of the aerosol-generating device and a battery terminal electrically connected to the battery, an aerosol-generating device main body including a battery accommodation portion accommodating the battery pack and a main body terminal electrically connected to the battery terminal, and to which the battery pack is separably coupled, and a connector configured to electrically connect the battery terminal to the main body terminal.

The connector may include a battery port protruding from the battery pack and connected to the battery terminal, and a main body port including a groove into which the battery port is inserted and connected to the main body terminal. When the battery port is inserted into the main body port, the main body terminal and the battery terminal may be electrically connected to each other.

The connector may include a battery port connected to the battery terminal, a main body port connected to the main body terminal, and a connection unit configured to connect the battery port and the main body port to each other and including a bendable material.

The connector may include a contact electrically connected to the main body terminal and the battery terminal, and a support member configured to support the contact.

The support member may include a first support block disposed in a central region and a second support block disposed in a side surface of the first support block. The contact may include a first contact disposed on the first support block and a second contact disposed on the second support block.

A length of the first contact may be longer than a length of the second contact.

The connector may include a contact electrically connected to the main body terminal and the battery terminal, an insulating member configured to support the contact, and a connector cover disposed to surround the contact and the insulating member.

An insertion hole may be formed between the connector cover and the insulating member. The insulating member may include a protrusion portion protruding outward from the insertion hole and on which the contact is disposed.

The connector may further include a connector shell disposed between the insulating member and the connector cover, and a sealing member disposed on a front end of the connector shell.

The contact may include a first contact disposed on one side of the insulating member and a second contact disposed on the other side of the insulating member.

Any one of the main body terminal or the battery terminal may include a first connection member connected to the other terminal, a first mounting member electrically connected to the first connection member, a first connecting member configured to connect the first connection member to the first mounting member, and a first elastic groove formed between the first connection member and the first connecting member such that the first connection member elastically moves.

The other one of the main body terminal or the battery terminal may include a second connection member connected to both ends of the first connection member, a second mounting member electrically connected to the second connection member, a second connecting member configured to connect the second connection member to the second mounting member, and a second elastic groove formed between the second connection member and the second connecting member such that the second connection member elastically moves.

The aerosol-generating device according to an embodiment may further include a guide portion configured to guide a movement of the battery pack such that the battery pack is accommodated in the battery accommodation portion. The guide portion may include a guide protrusion disposed on any one of the aerosol-generating device main body or the battery pack, and a guide groove disposed in the other one of the aerosol-generating device main body or the battery pack and into which the guide protrusion is inserted.

The aerosol-generating device according to an embodiment may further include a battery cover rotatably coupled to the aerosol-generating device main body to cover at least a part of the battery accommodation portion.

The aerosol-generating device according to an embodiment may further include a pressing member configured to press the battery pack toward the aerosol-generating device main body when the battery cover is located to seal the battery accommodation portion.

### Advantageous Effects of Invention

The aerosol-generating device according to various embodiments of the present disclosure includes a structure in which only a battery is replaced when the performance of the battery is degraded, thereby improving the ease of battery management.

In addition, the aerosol-generating device according to various embodiments of the present disclosure may easily separate the battery from the aerosol-generating device main body, thereby improving the ease of battery replacement work.

In addition, the aerosol-generating device according to various embodiments of the present disclosure may improve the bonding forces of terminals for electrical connection between the battery and the aerosol-generating device main body, thereby implementing a stable power supply structure.

The effects of the embodiments are not limited to the aforementioned description, and other effects may be clearly understood by one of ordinary skill in the art from the embodiments to be described hereinafter.

### Brief Description of Drawings

FIG. 1 is a perspective view of an aerosol-generating device in which a battery pack is used according to an embodiment.
FIG. 2 is a perspective view of an aerosol-generating device in which a battery pack is used according to another embodiment.
FIG. 3 is a perspective view of an aerosol-generating device in which a battery pack is used according to another embodiment.
FIG. 4 is a perspective view of an aerosol-generating device in which a battery pack is used according to an embodiment.
FIG. 5 is a diagram illustrating an example in which a battery pack is coupled to an aerosol-generating device main body.
FIG. 6 is a diagram illustrating another example in which a battery pack is coupled to an aerosol-generating device main body.
FIG. 7 is a diagram illustrating an example of a battery pack.
FIG. 8 is a diagram illustrating an aerosol-generating device main body to which the battery pack of FIG. 7 is coupled.
FIG. 9 is a diagram illustrating an example of a connector connecting a battery pack to an aerosol-generating device main body.
FIG. 10 is a diagram illustrating another example of a connector connecting a battery pack to an aerosol-generating device main body.
FIG. 11 is a bottom view of the connector shown in FIG. 10.
FIG. 12 is a diagram illustrating another example of a connector connecting a battery pack to an aerosol-generating device main body.
FIG. 13 is a cross-sectional view of the connector taken along line XIII-XIII of FIG. 12.
FIGS. 14A and 14B are diagrams illustrating a process of coupling a main body terminal and a battery terminal to each other.
FIG. 15 is a cross-sectional view of an aerosol-generating device main body with respect to an XV-XV cross-sectional line of FIG. 6 for explaining an example of a guide portion.
FIG. 16 is a cross-sectional view of an aerosol-generating device main body with respect to the XV-XV cross-sectional line of FIG. 6 for explaining another example of a guide portion.
FIG. 17 is a schematic front cross-sectional view of an aerosol-generating device for explaining an example of a pressing member.
FIG. 18 is a schematic front cross-sectional view of an aerosol-generating device for explaining another example of a pressing member.
FIGS. 19 and 20 are diagrams illustrating examples of an aerosol-generating article according to an embodiment.
FIG. 21 is a block diagram of an aerosol generating device according to another embodiment.

### Best Mode for Carrying out the Invention

According to an embodiment, an aerosol-generating device includes a battery pack including a battery configured to supply power for an operation of the aerosol-generating device and a battery terminal electrically connected to the battery, an aerosol-generating device main body including a battery accommodation portion accommodating the battery pack and a main body terminal electrically connected to the battery terminal, and to which the battery pack is separably coupled, and a connector configured to electrically connect the battery terminal to the main body terminal.

The connector may include a battery port protruding from the battery pack and connected to the battery terminal, and a main body port including a groove into which the battery port is inserted and connected to the main body terminal. When the battery port is inserted into the main body port, the main body terminal and the battery terminal may be electrically connected to each other.

The connector may include a battery port connected to the battery terminal, a main body port connected to the main body terminal, and a connection unit configured to connect the battery port and the main body port to each other and including a bendable material.

The connector may include a contact electrically connected to the main body terminal and the battery terminal, and a support member configured to support the contact.

The support member may include a first support block disposed in a central region and a second support block disposed in a side surface of the first support block. The contact may include a first contact disposed on the first support block and a second contact disposed on the second support block.

A length of the first contact may be longer than a length of the second contact.

The connector may include a contact electrically connected to the main body terminal and the battery terminal, an insulating member configured to support the contact, and a connector cover disposed to surround the contact and the insulating member.

An insertion hole may be formed between the connector cover and the insulating member. The insulating member may include a protrusion portion protruding outward from the insertion hole and on which the contact is disposed.

The connector may further include a connector shell disposed between the insulating member and the connector cover, and a sealing member disposed on a front end of the connector shell.

The contact may include a first contact disposed on one side of the insulating member and a second contact disposed on the other side of the insulating member.

Any one of the main body terminal or the battery terminal may include a first connection member connected to the other terminal, a first mounting member electrically connected to the first connection member, a first connecting member configured to connect the first connection member to the first mounting member, and a first elastic groove formed between the first connection member and the first connecting member such that the first connection member elastically moves.

The other one of the main body terminal or the battery terminal may include a second connection member connected to both ends of the first connection member, a second mounting member electrically connected to the second connection member, a second connecting member configured to connect the second connection member to the second mounting member, and a second elastic groove formed between the second connection member and the second connecting member such that the second connection member elastically moves.

The aerosol-generating device according to an embodiment may further include a guide portion configured to guide a movement of the battery pack such that the battery pack is accommodated in the battery accommodation portion. The guide portion may include a guide protrusion disposed on any one of the aerosol-generating device main body or the battery pack, and a guide groove disposed in the other one of the aerosol-generating device main body or the battery pack and into which the guide protrusion is inserted.

The aerosol-generating device according to an embodiment may further include a battery cover rotatably coupled to the aerosol-generating device main body to cover at least a part of the battery accommodation portion.

The aerosol-generating device according to an embodiment may further include a pressing member configured to press the battery pack toward the aerosol-generating device main body when the battery cover is located to seal the battery accommodation portion.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, when an expression such as "at least any one" precedes arranged elements, it modifies all elements rather than each arranged element. For example, the expression "at least any one of a, b, and c" should be construed to include a, b, c, or a and b, a and c, b and c, or a, b, and c.

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the suspector may be a magnetic body that generates heat by an external magnetic field. As the suspector is positioned inside the coil and a magnetic field is applied to the suspector, the suspector generates heat to heat an aerosol generating article. In addition, optionally, the suspector may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

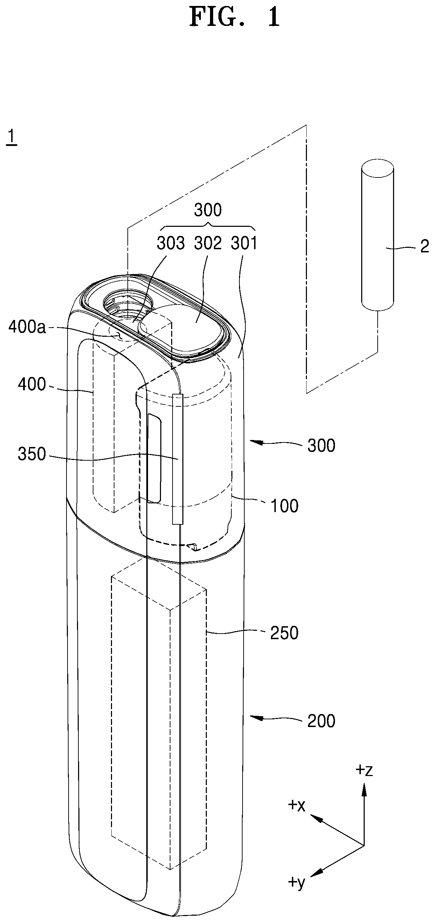

FIG. 1 is a perspective view of an aerosol-generating device in which a battery pack is used according to an embodiment.

Referring to FIG. 1, an aerosol-generating device 1 may include a cartridge 100, an aerosol-generating device main body 200, a cap 300, and a heater assembly 400. However, the components of the aerosol-generating device 1 are not limited thereto, and according to an embodiment, at least one of the above-described components may be omitted or other components may be added.

An aerosol-generating material may be stored in the cartridge 100 and provided to a heating portion included in the cartridge 100. Accordingly, the aerosol-generating material may be aerosolized by the heating portion in a chamber included in the cartridge 100. In the present specification, the term 'aerosol' may refer to particles generated from the mixture of air and vapor generated from a heated aerosol-generating material, and the term may be used in the same meaning below.

The aerosol-generating material stored in the cartridge 100 may include a tobacco-containing material having a volatile tobacco flavor component, or a liquid composition including a non-tobacco material.

According to an embodiment, the liquid composition may include any one component of water, solvents, ethanol, plant extracts, spices, flavorings, and vitamin mixtures, or a mixture of these components. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, or vitamin E, but are not limited thereto. In addition, the liquid composition may include an aerosol forming substance, such as glycerin and propylene glycol.

For example, the liquid composition may include any weight ratio of glycerin and propylene glycol solution to which nicotine salts are added. The liquid composition may include two or more types of nicotine salts. Nicotine salts may be formed by adding suitable acids, including organic or inorganic acids, to nicotine. Nicotine may be a naturally generated nicotine or synthetic nicotine and may have any suitable weight concentration relative to the total solution weight of the liquid composition.

Acid for the formation of the nicotine salts may be appropriately selected in consideration of the rate of nicotine absorption in the blood, the operating temperature of the aerosol-generating device 1, the flavor or savor, the solubility, etc. For example, the acid for the formation of nicotine salts may be a single acid selected from the group consisting of benzoic acid, lactic acid, salicylic acid, lauric acid, sorbic acid, levulinic acid, pyruvic acid, formic acid, acetic acid, propionic acid, butyric acid, valeric acid, caproic acid, caprylic acid, capric acid, citric acid, myristic acid, palmitic acid, stearic acid, oleic acid, linoleic acid, linolenic acid, phenylacetic acid, tartaric acid, succinic acid, fumaric acid, gluconic acid, saccharic acid, malonic acid or malic acid, or a mixture of two or more acids selected from the group, but is not limited thereto.

The device main body 200 may be located in a lower portion (e.g., a portion facing a -z direction) of the cartridge 100 and the cartridge 300 and support the cartridge 100 and the cartridge 300.

According to an embodiment, components for the operation of the aerosol-generating device 1 may be disposed inside the aerosol-generating device main body 200. For example, a battery pack 250 and a processor (not shown) may be disposed in the aerosol-generating device main body 200. However, the battery pack 250 and the processor are only examples of the components disposed in the aerosol-generating device main body 200, and other components (e.g., a user interface, a sensor, etc.) than the aforementioned components may be further disposed in the aerosol-generating device main body 200.

The battery pack 250 may include a battery supplying power used for the operation of the aerosol-generating device 1. For example, the battery may be electrically connected to the heating portion of the cartridge 100 and the heater assembly 400 and may supply power to the heating portion and the heater assembly 400 to heat the heating portion and the heater assembly 400. As another example, the battery may supply power necessary for operations of other components (e.g., the processor, etc.) of the aerosol-generating device 1. The battery pack 250 may include a terminal capable of electrically connecting the battery to a component (e.g., the heater assembly 400) of the aerosol-generating device 1. A detailed description of the battery pack 250 will be described below.

The processor may control general operations of the aerosol-generating device 1. The processor may be implemented as an array of a plurality of logic gates or may be implemented as a combination of a general-purpose microprocessor and a memory in which a program executable in the microprocessor is stored, but is not limited thereto.

According to an embodiment, the processor may control the power supplied from the battery to the heating portion and the heater assembly 400 of the aerosol-generating device 1. For example, the processor may control the amount and duration of the power supplied from the battery to the heating portion and the heater assembly 400 so that the heating portion and the heater assembly 400 are heated to a certain temperature or maintained at a specified temperature.

The cap 300 may be disposed to surround at least a part of the cartridge 100, at least a part of the aerosol-generating device main body 200, and at least a part of the heater assembly 400. For example, the cap 300 may be coupled to the aerosol-generating device main body 200 to entirely surround the outer side of the cartridge 100 and the outer side of the heater assembly 400. The cap 300 may protect the cartridge 100, the aerosol-generating device main body 200, and the heater assembly 400 from external impact or penetration of external foreign substances. The cap 300 may be separably coupled to the aerosol-generating device main body 200.

The cap 300 may include a cap main body 301, a door 302, and a cap hole 303.

The cap main body 301 may function as a main body of the cap 300 and may be separably coupled to the aerosol-generating device main body 200. At least a part of the door 302 may be inserted into the cap main body so that a door guide hole (not shown) guiding the movement of the door 302 may be formed.

The door 302 may be located on an upper portion (e.g., a portion facing a +z direction) of the cap main body 301 and may open or close the cap hole 303. The door 302 may be inserted into the door guide hole of the cap main body 301 and move in one direction (e.g., an x-axis direction).

The cap hole 303 may be formed in the upper portion (e.g., the portion facing the +z direction) of the cap main body 301 and fluid-connected to an accommodation portion 400a of the heater assembly 400. While the cap 300 is coupled to the aerosol-generating device main body 200, the aerosol-generating article 2 may sequentially pass through the cap hole 303 and the accommodation portion 400a and may be accommodated in the accommodation portion 400a of the heater assembly 400.

The cap 300 may further include a window 350.

The window 350 may include a transparent material, for example, acryl or glass. The window 350 may be formed on an outer surface of the cap main body 301 in one direction (e.g., a z-axis direction) at a location corresponding to the cartridge 100. The user may use the window 350 to check the remaining amount of aerosol-generating material stored in the cartridge 100.

A heater assembly for an aerosol-generating device (hereinafter, referred to as the "heater assembly 400") may be coupled to the aerosol-generating device main body 200 to accommodate and heat the aerosol-generating article 2. In this regard, the heater assembly 400 may heat a tobacco rod of the aerosol-generating article 2 to heat the aerosol-generating material included in the aerosol-generating article 2.

For example, the heater assembly 400 may include an electrically conductive track, and the heater may be heated when current flows through the electrically conductive track. The heater assembly 400 may include any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, etc., but is not limited thereto.

The heater may include a tube-shaped heating element, a plate-shaped heating element, a needle-shaped heating element, or a rod-shaped heating element, and may heat the inside or outside of a cigarette according to the shape of a heating element.

The heater assembly 400 may be connected to a chamber of the cartridge 100. Accordingly, an aerosol generated in the chamber may move to the heater assembly 400. The aerosol that has moved to the heater assembly 400 may pass through the aerosol-generating article 2 accommodated in the accommodation portion 400a formed in the heater assembly 400 and be discharged to the outside. The user may contact the aerosol-generating article 2 with his/her mouth and inhale the aerosol discharged to the outside of the aerosol-generating device 1 through the aerosol-generating article 2.

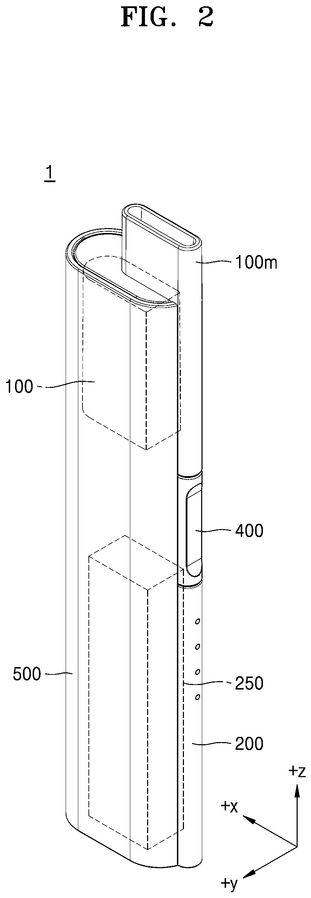

FIG. 2 is a perspective view of an aerosol-generating device in which a battery pack is used according to another embodiment.

Referring to FIG. 2, the aerosol-generating device 1 may include the cartridge 100, the aerosol-generating device main body 200, the battery pack 250, the heater assembly 400, and a cover 500. However, the components of the aerosol-generating device 1 are not limited thereto, and according to an embodiment, at least one (e.g., the cover 500) of the above-described components may be omitted or other components may be added.

In addition, at least one of the components of the aerosol-generating device 1 may be the same as or similar to at least one (e.g., the battery pack 250) of the components of the aerosol-generating device 1 shown in FIG. 1, and redundant descriptions thereof are omitted below.

An aerosol-generating material may be stored inside the cartridge 100 and provided to the heater assembly 400 disposed in a lower end (e.g., a part facing the -z direction) of the cartridge 100. The aerosol-generating material stored inside the cartridge 100 is the same as or similar to the aerosol-generating material described with reference to FIG. 1, and thus a specific description thereof is omitted.

According to an embodiment, the cartridge 100 may include a mouthpiece 100m configured to provide an aerosol to a user. For example, the mouthpiece 100m may connect or fluid-connect the inside of the heater assembly 400 to the outside of the aerosol-generating device 1, and the aerosol generated inside the heater assembly 400 may be discharged to the outside of the aerosol-generating device 1 through the mouthpiece 100m. In this regard, the user may contact the mouthpiece 100m with his/her mouth and inhale the aerosol discharged to the outside of the aerosol-generating device 1.

In the present specification, the term "fluid-connection" may indicate that components are connected so that a fluid, such as air or liquid, may flow through the components.

The aerosol-generating device main body 200 may be located on the lower end of the heater assembly 400 and support the heater assembly 400, and components for operation of the aerosol-generating device 1 may be disposed inside the aerosol-generating device main body 200. The component (e.g., the battery pack 250) disposed inside the aerosol-generating device main body 200 is the same as or similar to that described above with reference to FIG. 1, and thus detailed descriptions thereof are omitted.

The heater assembly 400 may be disposed between the cartridge 100 and the aerosol-generating device main body 200 and generate an aerosol by converting the phase of the aerosol-generating material into a gaseous phase. The heater assembly 400 may heat the aerosol-generating material provided from the cartridge 100 to generate the aerosol.

For example, the heater assembly 400 may heat the aerosol-generating material provided from the cartridge 100 to generate vapor from the aerosol-generating material. The generated vapor may be mixed with external air introduced from the outside of the heater assembly 400 to the inside thereof, and as a result, an aerosol may be generated. The heater assembly 400 may include a chamber providing a space in which the aerosol is generated, a wick into which the aerosol-generating material is absorbed, and a heating portion heating the aerosol-generating material absorbed in the wick.

In the aerosol-generating device 1 according to an embodiment, the cartridge 100 may be detachably coupled to the heater assembly 400, and through a configuration in which the heater assembly 400 is detachably coupled to the aerosol-generating device main body 200, the cartridge 100 and/or the heater assembly 400 may be replaceable.

When the aerosol-generating material stored in the cartridge 100 is depleted, the user may continue to smoke by replacing the existing cartridge 100 with a new cartridge 100. As another example, when a sufficient amount of aerosols is not generated due to the performance degradation of a component (e.g., a heater or a wick) of the heater assembly 400, the user may replace the existing heater assembly 400 with a new heater assembly 400 to generate a sufficient amount of aerosols.

When the replacement of the cartridge 100 is required as the aerosol-generating material stored in the cartridge 100 is consumed, the aerosol-generating device 1 according to an embodiment may be implemented in a structure in which only the cartridge 100 is replaced and the heater assembly 400 is reusable. This is because the cartridge 100 is detachably coupled to the heater assembly 400. Accordingly, because a component, such as a heater, included in the heater assembly 400 is not necessarily replaced even when the cartridge 100 needs to be changed, the overall cost of using the aerosol-generating device 1 according to an embodiment may be reduced.

According to an embodiment, the aerosol-generating device 1 may further include the cover 500 to protect the components of the aerosol-generating device 1.

The cover 500 may be disposed to surround the cartridge 100, the aerosol-generating device main body 200, and at least a region of the heater assembly 400 to fix the positions of the cartridge 100, the aerosol-generating device main body 200, and the heater assembly 400 and may protect the cartridge 100, the aerosol-generating device main body 200, and the heater assembly 400 from external impact or penetration of foreign substances.

According to an embodiment, the cover 500 may be formed integrally with the aerosol-generating device main body 200, but is not limited thereto. In another embodiment, the cover 500 may be detachably coupled to the aerosol-generating device main body 200.

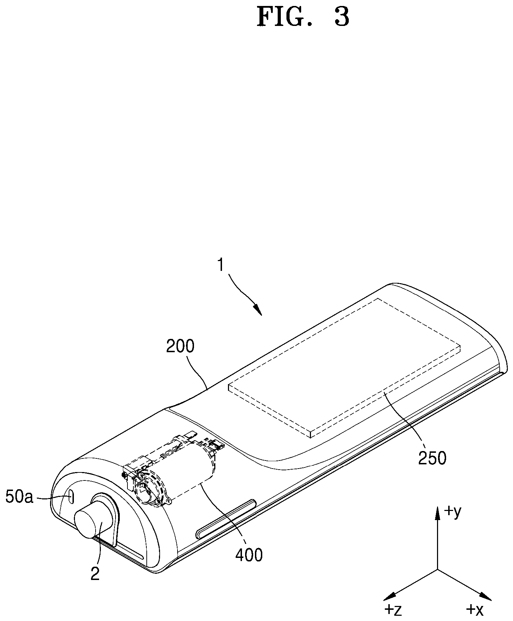

FIG. 3 is a perspective view of an aerosol-generating device in which a battery pack is used according to another embodiment.

Referring to FIG. 2, the aerosol-generating device 1 may include the aerosol-generating device main body 200, the battery pack 250, and the heater assembly 400. At least one of the components of the aerosol-generating device 1 may be the same as or similar to at least one (e.g., the battery pack 250) of the components of the aerosol-generating device 1 described above, and redundant descriptions thereof are omitted hereinafter.

The aerosol-generating device 1 may generate an aerosol by heating the aerosol-generating article 2 accommodated in the aerosol-generating device 1 in an induction heating method. The induction heating method may refer to a method of generating heat of a magnetic body by applying an alternating magnetic field whose direction is periodically changed to the magnetic body that generates heat by an external magnetic field.

When the alternating magnetic field is applied to the magnetic body, energy loss due to eddy current loss and hysteresis loss may occur in the magnetic body, and the lost energy may be emitted from the magnetic body as thermal energy. The greater the amplitude or frequency of the alternating magnetic field applied to the magnetic body, the more the heat energy may be emitted from the magnetic body. The aerosol-generating device 1 according to an embodiment may emit thermal energy from the magnetic body by applying the alternating magnetic field to the magnetic body, and may transfer the thermal energy emitted from the magnetic body to an aerosol-generating article.

The magnetic body that generates heat by the external magnetic field may be a susceptor.

According to an embodiment, the susceptor may be disposed inside the heater assembly 400, and may be disposed to surround the aerosol-generating article 2 accommodated in an accommodation space. In this case, the susceptor may be formed in the shape of a hollow cylinder as a whole, but the shape is not limited thereto.

According to another embodiment, the susceptor may be disposed inside the aerosol-generating article 2 accommodated in the aerosol-generating device 1. In this case, the susceptor may be included in the aerosol-generating article 2 in the shape of a piece, a flake, or a strip.

At least a part of the susceptor may include a ferromagnetic substrate. For example, the susceptor may contain metal or carbon. The susceptor may include at least one of ferrite, a ferromagnetic alloy, stainless steel, or aluminum (Al). In addition, the susceptor may include at least one of ceramic such as graphite, molybdenum, silicon carbide, niobium, nickel alloy, metal film, zirconia, etc., transition metal such as nickel (Ni) or cobalt (Co), or metalloid such as boron (B) or phosphorus (P).

The aerosol-generating device 1 may accommodate the aerosol-generating article 2. In the aerosol-generating device 1 according to an embodiment, a space accommodating the aerosol-generating article 2 may be formed. Here, a heater assembly 10 may be disposed in the space of the aerosol-generating device 1 accommodating the aerosol-generating article 2. For example, the heater assembly 400 may include a cylindrical accommodation space accommodating the aerosol-generating article 2 therein. Therefore, when the aerosol-generating article 2 is accommodated in the aerosol-generating device 1, the aerosol-generating article 2 may be accommodated in the accommodation space of the heater assembly 400.

The heater assembly 400 may heat the aerosol-generating article 2 accommodated in the aerosol-generating device 1. As described above, the heater assembly 400 may heat the aerosol-generating article 2 in an induction heating method. According to an embodiment, the heater assembly 400 may generate heat of the susceptor by applying the alternating magnetic field to the susceptor.

The heater assembly 400 may surround at least a part of the aerosol-generating article 2 accommodated in the aerosol-generating device 1. For example, the heater assembly 400 may surround a tobacco medium included in the aerosol-generating article 2. Accordingly, heat may be more efficiently transferred from the heater assembly 400 to the tobacco medium.

A battery included in the battery pack 250 may supply power to the aerosol-generating device 1. For example, the battery may supply power to a coil of the heater assembly 400. As another example, the battery may supply power necessary for operations of other components (e.g., a control unit, etc.) of the aerosol-generating device 1.

The battery may include a battery unit that supplies direct current to the coil of the heater assembly 400 and a conversion unit that converts the direct current supplied from the battery unit into alternating current supplied to the coil of the heater assembly 400.

The battery unit may supply direct current to the aerosol-generating device 1. The battery unit may be a lithium iron phosphate (LiFePO₄) battery, but is not limited thereto. For example, the battery unit may be a lithium cobalt oxide (LiCoO₂) battery, a lithium titanate battery, a lithium polymer (LiPoly) battery, etc.

The conversion unit may include a low-pass filter that performs filtering on the direct current supplied from the battery and outputs the alternating current supplied to the heater assembly 400. The conversion unit may further include an amplifier amplifying the direct current supplied from the battery unit. For example, the conversion unit may be implemented through a low-pass filter constituting a load network of a class-D amplifier.

Although not shown, the aerosol-generating device 1 may further include a control unit and a vaporizer.

The control unit may control general operations of the aerosol-generating device 1. The control unit may be implemented as an array of a plurality of logic gates or may be implemented as a combination of a general-purpose microprocessor and a memory in which a program executable in the microprocessor is stored, but is not limited thereto.

According to an embodiment, the control unit may control power supplied to the heater assembly 400. Here, a control target of the control unit may be the coil of the heater assembly 400. The control unit may control the battery so that the power supplied to the coil of the heater assembly 400 is adjusted. For example, the control unit may perform control to maintain a constant temperature at which the coil heats the aerosol-generating article 2 based on the temperature of the coil of the heater assembly 400.

The vaporizer may generate an aerosol by heating an aerosol-generating material in liquid form, and the generated aerosol may pass through the aerosol-generating article 2 and be delivered to a user. In other words, the aerosol generated by the vaporizer may move along an airflow passage of the aerosol-generating device 1, and the airflow passage may be configured so that the aerosol generated by the vaporizer may pass through the aerosol-generating article 2 and be delivered to the user.

For example, the vaporizer may include a storage storing an aerosol-generating material in liquid form, a liquid transfer element, and a heating element, but is not limited thereto. For example, the storage, the liquid transfer element, and the heating element may be included in the aerosol-generating device 1 as independent modules.

The storage may store the aerosol-generating material in liquid form. For example, the aerosol-generating material in liquid form has been described with reference to FIGS. 1 and 2, and thus will be omitted.

The liquid transfer element may transfer an aerosol-generating material of the storage to the heating element. For example, the liquid transfer element may be a wick such as cotton fiber, ceramic fiber, glass fiber, or porous ceramic, but is not limited thereto.

The heating element is an element for heating the aerosol-generating material transferred by the liquid delivery element. For example, the heating element may be a metal heating wire, a metal hot plate, a ceramic heater, etc., but is not limited thereto. In addition, the heating element may include a conductive filament such as nichrome wire and may be located as being wound around the liquid delivery element. The heating element may be heated by a current supply and may transfer heat to the aerosol-generating material in contact with the heating element, thereby heating the aerosol-generating material. As a result, an aerosol may be generated.

For example, the vaporizer may be referred to as a cartomizer or an atomizer, but is not limited thereto.

When the aerosol-generating device 1 according to an embodiment further includes the vaporizer, the battery may supply power so that at least one of the heater assembly 400 or the vaporizer may be heated, and the control unit may control power supplied to at least one of the heater assembly 400 or the vaporizer.

When the aerosol-generating article 2 is inserted into the aerosol-generating device 1 according to an embodiment, the aerosol-generating device 1 may generate the aerosol from the aerosol-generating article 2 and/or the vaporizer by operating the heater assembly 400 and/or the vaporizer. The aerosol generated by the heater assembly 400 and/or the vaporizer may pass through the aerosol-generating article 2 and be delivered to the user.

The aerosol-generating device main body 200 may form the overall appearance of the aerosol-generating device 1 according to an embodiment. Components for the operation of the aerosol-generating device 1 may be disposed inside the aerosol-generating device main body 200. For example, the heater assembly 400, the battery pack 250, the control unit, and the vaporizer described above may be disposed inside the aerosol-generating device 1. However, the heater assembly 400, the battery pack 250, the control unit, and the vaporizer are only examples of components disposed inside the aerosol-generating device 1, and other components (e.g., a user interface, a sensor, etc.) than the above-described components may be further disposed inside the aerosol-generating device 1.

An air inlet 50a through which external air is introduced may be formed in the aerosol-generating device main body 200. The air inlet 50a may be connected to or fluid-connected to an airflow passage cover of the heater assembly 400 to be described below.

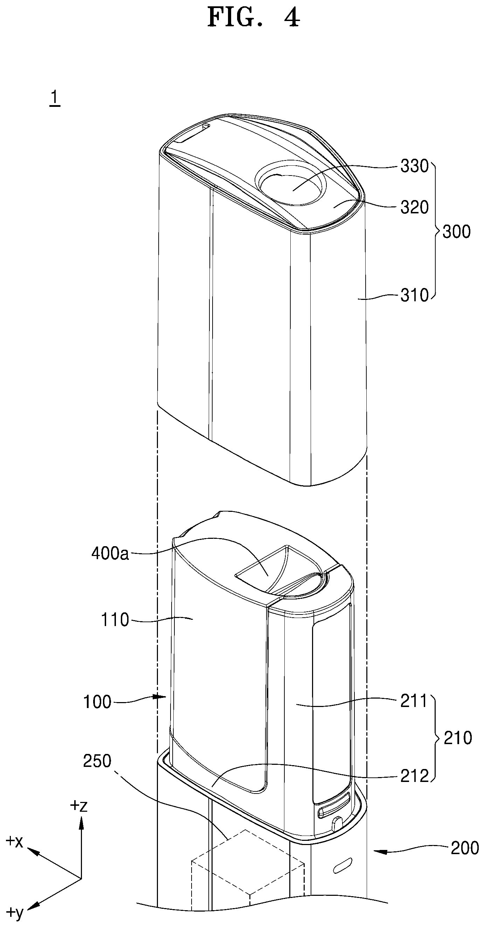

FIG. 4 is a perspective view of an aerosol-generating device in which a battery pack is used according to an embodiment.

Referring to FIG. 4, the aerosol-generating device 1 may include the cartridge 100, the aerosol-generating device main body 200, the battery pack 250, and the cap 300. At least one of the components of the aerosol-generating device 1 may be the same as or similar to at least one (e.g., the battery pack 250) of the components of the aerosol-generating device 1 described above, and a redundant description thereof will be omitted below.

The cartridge 100 may include a storage 110 in which an aerosol-generating material is stored, and the accommodation portion 400a in which an aerosol-generating article is accommodated. The cartridge 100 may further include a chamber providing a space in which an aerosol is generated, and a heating portion heating the aerosol-generating material.

The storage 110 may be connected to or fluid-connected to an inner space of the chamber of the cartridge 100, and as a result, the aerosol-generating material stored in the storage 110 may be introduced into the inner space of the chamber of the cartridge 100. The chamber may be located on a lower end of the storage 110.

In this regard, the aerosol-generating material stored in the storage 110 may include a volatile tobacco flavor component or a liquid composition including a non-tobacco material. The aerosol-generating material stored in the storage 110 is the same as or similar to the aerosol-generating material described with reference to FIG. 1, and thus a detailed description thereof will be omitted.

The accommodation portion 400a may accommodate the aerosol-generating article and may be disposed on one side (e.g., -x direction) of the storage 110. The inner space of the accommodation portion 400a accommodating the aerosol-generating article 2 may be spatially separated from the storage 110, and as a result, the aerosol-generating material stored in the storage 110 may not be introduced into the inner space of the accommodation portion 400a.

The accommodation portion 400a may be connected to or fluid-connected to the chamber of the cartridge 100. Accordingly, the aerosol generated in the chamber may move to the accommodation portion 400a. In this case, the aerosol that has moved to the accommodation portion 400a may pass through the aerosol-generating article 2 accommodated in the accommodation portion 400a and be discharged to the outside. A user may contact the aerosol-generating article 2 with his/her mouth and inhale the aerosol discharged to the outside of the aerosol-generating device 1 through the aerosol-generating article 2.

The aerosol-generating device main body 200 may be located in the lower end of the cartridge 100 to support the cartridge 100, and components for the operation of the aerosol-generating device 1 may be disposed inside the aerosol-generating device main body 200. The components disposed inside the aerosol-generating device main body 200 are the same as or similar to the components of the aerosol-generating device main body described above, and thus detailed descriptions thereof will be omitted.

The aerosol-generating device main body 200 may include a cartridge coupling portion 210.

The cartridge 100 may be separably coupled to the cartridge coupling portion 210. The cartridge 100 is coupled to the cartridge coupling portion 210 and thus may be coupled to the aerosol-generating device main body 200, and is separated from the cartridge coupling portion 210 and thus may be separated from the aerosol-generating device main body 200.

The cartridge coupling portion 210 may be disposed in an upper portion (e.g., a portion facing the +z direction) of the aerosol-generating device main body 200. The cartridge coupling portion 210 may include a first part 211 extending in one direction (e.g., the z-axis direction) and a second part 212 extending in a direction (e.g., the x-axis direction) intersecting the one direction. The first part 211 and the second part 212 may be integrally formed.

The first part 211 of the cartridge coupling portion 210 may be coupled to a side portion (e.g., a portion facing the -x direction) of the cartridge 100, and the second part 212 of the cartridge coupling portion 210 may be coupled to a lower portion (e.g., a portion facing the -z direction) of the cartridge 100.

The cartridge 100 may be detachable to the aerosol-generating device main body 200 through a structure in which the cartridge 100 is detachably coupled to the cartridge coupling portion 210. That is, the aerosol-generating device 1 according to an embodiment may have a structure in which the storage 110 storing the aerosol-generating material and the accommodation portion 400a accommodating the aerosol-generating article 2 are replaced together through the replacement of the cartridge 100.

Although not shown, the aerosol-generating device main body 200 may further include a terminal.

The terminal may perform a function of electrically connecting the cartridge 100 to the aerosol-generating device main body 200. For example, the terminal may electrically connect a heating portion of the cartridge 100 to a battery of the aerosol-generating device main body 200. In this case, the terminal may have one end electrically connected to the battery and the other end electrically connected to the heating portion of the cartridge 100. When the cartridge 100 is coupled to the cartridge coupling portion 210, the terminal may be electrically connected to the cartridge 100. A hole through which the terminal is exposed to an upper portion of the cartridge coupling portion 210 may be formed in the cartridge coupling portion 210.

The cap 300 is separably coupled to the aerosol-generating device main body 200. The cap 300 may be coupled to the aerosol-generating device main body 200 from an upper side (e.g., +z direction) of the cartridge 100 and the aerosol-generating device main body 200. In an embodiment, when the cap 300 is coupled to the aerosol-generating device main body 200, the cap 300 may be disposed to surround the entire outer side of the cartridge 100 and the entire outer side of the cartridge coupling portion 210.

The cap 300 may include a cap main body 310 surrounding the outer side of the cartridge 100 and the cartridge coupling portion 210, an upper cap 320 coupled to an upper portion (e.g., a portion facing the +z direction) of the cap main body 310 to surround the upper side of the cartridge 100 and the cartridge coupling portion 210, and an accommodation portion cap 330 coupled to the upper cap 320 to cover the upper side (e.g., +z direction) of the accommodation portion 400a.

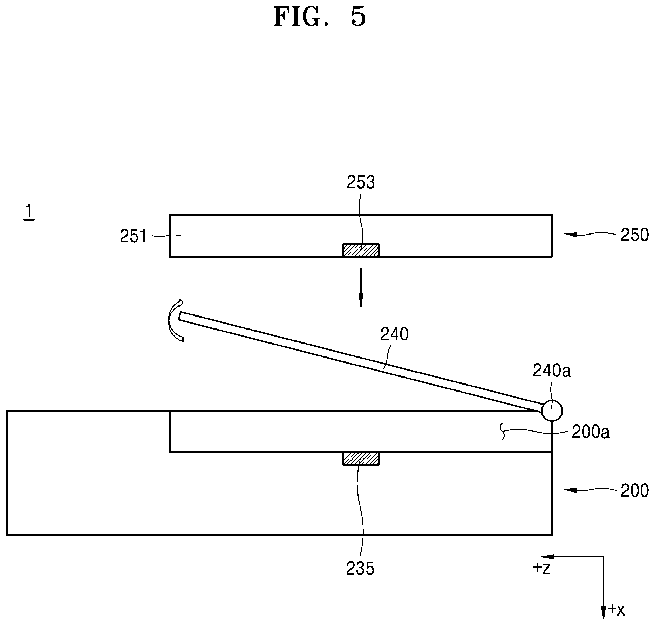

FIG. 5 is a diagram illustrating an example in which a battery pack is coupled to an aerosol-generating device main body.

Referring to FIG. 5, the aerosol-generating device 1 may include the aerosol-generating device main body 200 and the battery pack 250. The aerosol-generating device main body 200 shown in FIG. 5 may be any one of the aerosol-generating device main body 200 described with reference to FIGS. 1 to 4, and the battery pack 250 shown in FIG. 5 may be any one of the battery pack 250 described with reference to FIGS. 1 to 4, and thus redundant descriptions thereof will be omitted.

The aerosol-generating device main body 200 may include a battery accommodation portion 200a, a main body terminal 235, and a battery cover 240.

The battery pack 250 may be accommodated in the battery accommodation portion 200a, and the battery accommodation portion 200a may be formed in a shape corresponding to the battery pack 250. The battery accommodation portion 200a may be located in a side surface (e.g., a surface facing the -x direction) of the aerosol-generating device main body 200, and may be opened to communicate with the outside or closed to be spatially separated from the outside by the battery cover 240.

The main body terminal 235 may be electrically connected to a battery when the battery pack 250 is accommodated in the battery accommodation portion 200a. One side of the main body terminal 235 may be electrically connected to an internal component (e.g., a heater assembly) of the aerosol-generating device main body 200, and the other side of the main body terminal 235 may be exposed toward the battery accommodation portion 200a. For example, the main body terminal 235 may include at least one of copper (Cu), aluminum (Al), gold (Au), or silver (Ag), and the main body terminal 235 may be plated with gold or silver. However, the main body terminal 235 is not limited thereto.

The battery cover 240 may open or close the battery accommodation portion 200a. In an embodiment, the battery cover 240 may be rotatably coupled to the aerosol-generating device main body 200 through a hinge 240a. The battery cover 240 may have a length equal to or longer than that of the battery accommodation portion 200a in a longitudinal direction (e.g., the z-axis direction) so as to close the battery accommodation portion 200a.

The battery pack 250 may include a battery pack main body 251 and a battery terminal 253.

The battery pack 250 may be separably coupled to the aerosol-generating device main body 200. In an embodiment, the battery pack 250 may be accommodated in the battery accommodation portion 200a in one side surface (e.g., a surface facing the -x direction) of the aerosol-generating device main body 200. However, this is exemplary, and the battery pack 250 may be accommodated in the battery accommodation portion 200a in the other side surface (e.g., a surface facing the +x direction) of the aerosol-generating device main body 200.

The battery pack main body 251 may function as a main body of the battery pack 250, and the battery may be included in the battery pack main body 251. A battery terminal 253 may be coupled to the battery pack body 251. The battery pack body 251 may be formed in a shape corresponding to the battery accommodation portion 200a.

The battery terminal 253 may be electrically connected to the main body terminal 235 when the battery pack 250 is accommodated in the battery accommodation portion 200a. When the battery terminal 253 and the main body terminal 235 are connected to each other, power supply and/or communication may be performed between the battery and the aerosol-generating device main body 200. One side of the battery terminal 253 may be electrically connected to the battery, and the other side of the battery terminal 253 may be exposed to the outside of the battery pack body 251. For example, the battery terminal 253 may include at least one of copper (Cu), aluminum (Al), gold (Au), or silver (Ag), and the battery terminal 253 may be plated with a gold or silver material. However, the battery terminal 253 is not limited thereto.

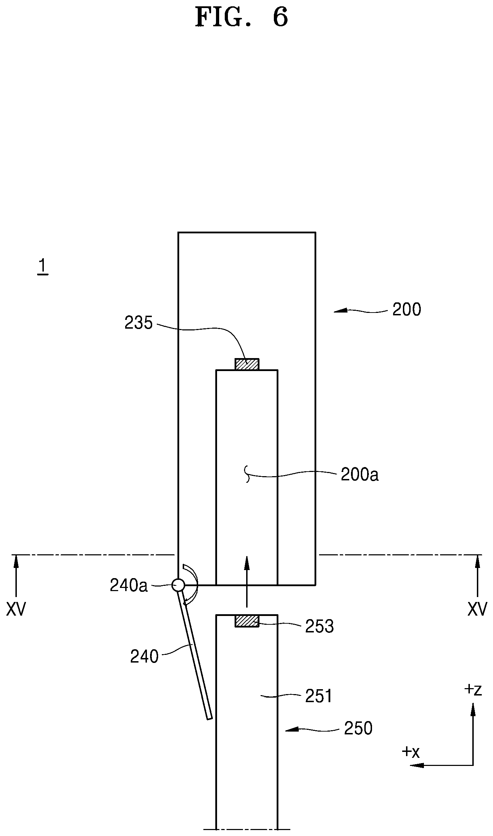

FIG. 6 is a diagram illustrating another example in which a battery pack is coupled to an aerosol-generating device main body.

Referring to FIG. 6, the aerosol-generating device 1 may include the aerosol-generating device main body 200 and the battery pack 250. The aerosol-generating device main body 200 shown in FIG. 6 may be any one of the aerosol-generating device main body 200 described with reference to FIGS. 1 to 4, and the battery pack 250 shown in FIG. 6 may be any one of the battery pack 250 described with reference to FIGS. 1 to 4, and thus redundant descriptions thereof will be omitted.

In addition, at least one of the components of the aerosol-generating device main body 200 of FIG. 6 is the same or similar to the component of the aerosol-generating device main body 200 of FIG. 5, and at least one of the components of the battery pack 250 of FIG. 6 is the same or similar to the component of the battery pack 250 of FIG. 5, and thus the differences will be mainly described below.

The battery cover 240 may open or close the battery accommodation portion 200a. In an embodiment, the battery cover 240 may be rotatably coupled to the aerosol-generating device main body 200 through the hinge 240a. The battery cover 240 may have a length equal to or longer than that of the battery accommodation portion 200a in a width direction (e.g., the x-axis direction) so as to close the battery accommodation portion 200a.

The battery pack 250 may be separably coupled to the aerosol-generating device main body 200. In an embodiment, the battery pack 250 may be accommodated in the battery accommodation portion 200a in a lower surface (e.g., a surface facing the -z direction) of the aerosol-generating device main body 200.

Hereinafter, various embodiments in which the battery pack 250 is electrically connected to the aerosol-generating device main body 200 will be described in detail.

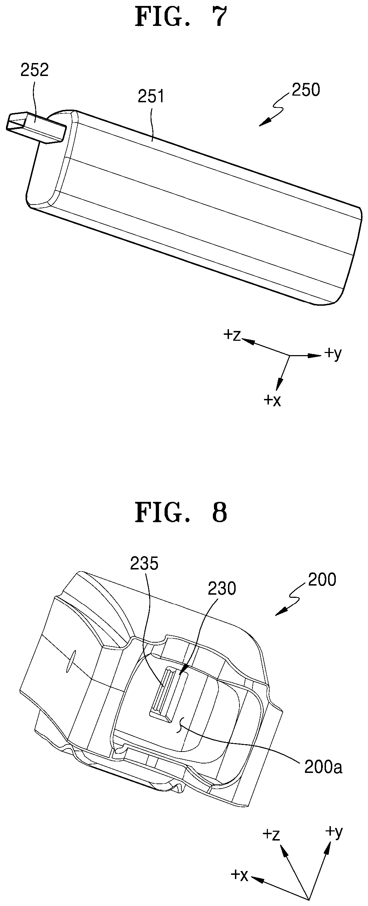

FIG. 7 is a diagram illustrating an example of a battery pack.

Referring to FIG. 7, the battery pack 250 may include the battery pack main body 251 and a battery port 252. The battery pack 250 shown in FIG. 7 is the same as or similar to the battery pack 250 described with reference to FIGS. 1 to 6, and thus differences will be mainly described below.

The battery port 252 may be an interface for being electrically connected to an aerosol-generating device main body. In an embodiment, the battery port 252 may be a universal serial bus (USB). The battery port 252 may include the above-described battery terminal. The battery port 252 may protrude outward from the battery pack main body 251.

As shown in FIG. 7, the battery port 252 may be included in an aerosol-generating device as one module with the battery pack 250, but this is exemplary and the battery port 252 may be included in the aerosol-generating device as a module independent from the battery pack 250.

FIG. 8 is a diagram illustrating an aerosol-generating device main body to which a battery pack of FIG. 7 is coupled.

Referring to FIG. 8, the aerosol-generating device main body 200 may include the battery accommodation portion 200a, a main body port 230, and a main body terminal 235. The aerosol-generating device main body 200 shown in FIG. 8 may be the same as or similar to the aerosol-generating device main body 200 shown in FIGS. 1 to 6, and thus differences will be mainly described below.

The main body port 230 may be an interface for being electrically connected to an aerosol-generating device main body. In an embodiment, the main body port 230 may be a USB. The main body port 230 may include the main body terminal 235. The main body port 30 is a groove into which the battery port 252 (shown in FIG. 7) is inserted, and may communicate with the battery accommodation portion 200a.

When the battery pack 250 (shown in FIG. 7) is accommodated in the battery accommodation portion 200a, the battery port 252 (shown in FIG. 7) may be inserted into the main body port 230. When the battery port 252 (shown in FIG. 7) is inserted into the main body port 230, the main body terminal 235 and a battery terminal may be electrically connected to each other. Accordingly, the aerosol-generating device main body 200 and the battery pack 250 (shown in FIG. 7) may be electrically connected to each other.

Meanwhile, unlike shown in FIGS. 7 and 8, the main body port 230 may protrude toward the battery accommodation portion 200a, and the battery port 252 may include a groove into which the main body port 230 is inserted.

In addition, the main body port 230 and battery port 252 described with reference to FIGS. 7 and 8 may be referred to as a connector connecting the main body terminal 235 to the battery terminal.

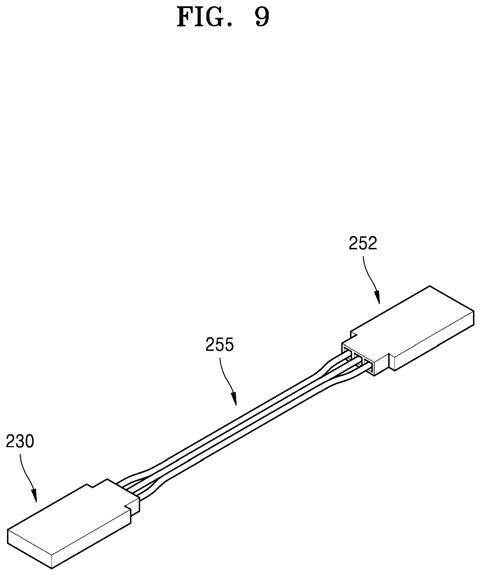

FIG. 9 is a diagram illustrating an example of a connector connecting a battery pack to an aerosol-generating device main body.

Referring to FIG. 9, the connector may include the main body port 230, the battery port 252, and a connection unit 255. The connector may be included in an aerosol-generating device as an independent module as shown in FIG. 9, or may be included in the aerosol-generating device as a module integrated with at least one of an aerosol-generating device main body or a battery pack.

The main body port 230 may be separably coupled to the aerosol-generating device main body. In an embodiment, the aerosol-generating device main body may include a groove into which the main body port 230 is inserted. The main body port 230 may include at least one terminal, and may be electrically connected to the main body terminal when coupled to the aerosol-generating device.

The battery port 252 may be separably coupled to the battery pack. In an embodiment, the battery pack may include a groove into which the battery port 252 is inserted. The battery port 252 may include at least one terminal, and may be electrically connected to the battery terminal when coupled to the battery pack.

The battery port 252 and the main body port 230 may be electrically connected to each other through the connection unit 255.

The connection unit 255 may connect the battery port 252 to the main body port 230. The connection unit 255 may include a bendable flexible material, and may have a certain length. Accordingly, even though a region of the battery pack to which the battery port 252 is connected and a region of the aerosol-generating device to which the main body port 230 is connected are spaced part from each other by a certain distance, the battery pack and the aerosol-generating device main body may be electrically connected to each other through the connection unit 255. In addition, even though a single component of the aerosol-generating device is disposed between one region of the battery pack to which the battery port 252 is connected and one region of the aerosol-generating device to which the main body port 230 is connected, the connection unit 255 may be bent, and thus the battery pack and the aerosol-generating device main body may be electrically connected to each other by avoiding the single component. In an embodiment, the connection unit 255 may be implemented as a wire or a flexible printed circuit board (FPCB).

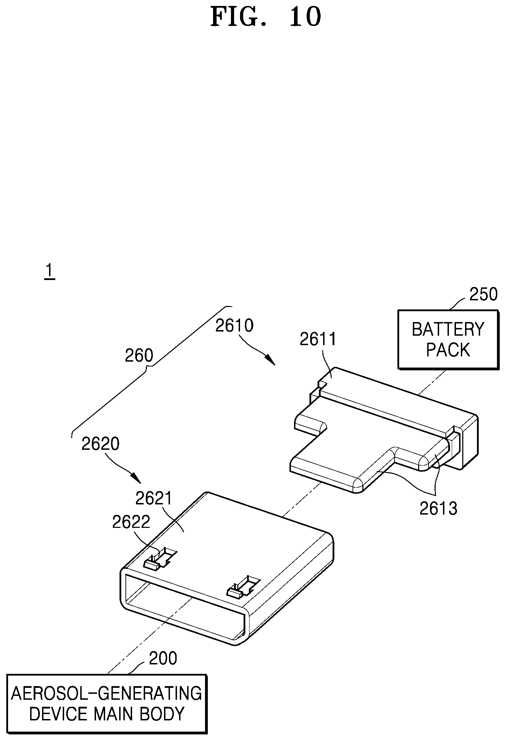

FIG. 10 is a diagram illustrating another example of a connector connecting a battery pack to an aerosol-generating device main body.

Referring to FIG. 10, the aerosol-generating device 1 may include the aerosol-generating device main body 200, the battery pack 250, and a connector 260. The aerosol-generating device main body 200 shown in FIG. 10 is the same as or similar to the aerosol-generating device main body 200 described with reference to FIGS. 1 to 6, and the battery pack 250 shown in FIG. 10 is the same as or similar to the battery pack 250 described with reference to FIGS. 1 to 6, and thus redundant descriptions thereof will be omitted.

The connector 260 may electrically connect the aerosol-generating device main body 200 to the battery pack 250. The connector 260 may be included in the aerosol-generating device 1 as an independent module, and may be included in the aerosol-generating device 1 as a module integrated with at least one of the aerosol-generating device main body 200 or the battery pack 250.

The connector 260 may be inserted into one region of the aerosol-generating device main body 200 while connected to the battery pack 250. The connector 260 may be inserted into the one region of the aerosol-generating device main body 200 and electrically connected to a main body terminal. Accordingly, the connector 260 may electrically connect the battery pack 250 to the aerosol-generating device main body 200.

However, this is exemplary, and unlike shown in FIG. 10, the connector 260 may be inserted into one region of the battery pack 250 while connected to the aerosol-generating device main body 200. That is, the connector 260 may be inserted into the one region of the battery pack 250 and electrically connected to a battery terminal. Accordingly, the connector 260 may electrically connect the battery pack 250 to the aerosol-generating device main body 200.

The connector 260 may include a connection unit 2610 and a connector cover 2620.

At least one region of the connection unit 2610 may be surrounded by the connector cover 2620. The connection unit 2610 may be inserted into the connector cover 2620, and one end portion thereof may protrude from the connector cover 2620. Accordingly, a protruding portion of the connection unit 2610 may be connected to the main body terminal of the aerosol-generating device main body 200.

The connection unit 2610 may include an insulating member 2611 and a support member 2613.

A plurality of contacts may be disposed on the insulating member 2611. A hole through which some of the plurality of contacts pass may be formed in the insulating member 2611. The insulating member 2611 may include an insulating material. For example, the insulating member 2611 may include a material such as rubber.

The support member 2613 may be coupled to the insulating member 2611 and extend from the insulating member 2611 in one direction. A plurality of contacts may be disposed on the support member 2613. The support member 2613 may perform a function of supporting the plurality of contacts. The support member 2613 may include an insulating material. For example, the support member 2613 may include a material such as rubber. The protruding portion of the connection unit 2610 described above may be an end portion of the support member 2613.

The connector cover 2620 may be disposed to surround at least a part of the connection unit 2610. The connector cover 2620 may perform a function of protecting the connection unit 2610 from an external impact.

The connector cover 2620 may include a cover body 2621 including a hole into which the connection unit 2610 is inserted and surrounding the connection unit 2610, and a coupling hole 2622 for being coupled to the aerosol-generating device main body 200. At least a part of the aerosol-generating device main body 200 may be inserted into the coupling hole 2622, and as a result, the connector cover 2620 may be coupled to the aerosol-generating device main body 200. In an embodiment, the connector cover 2620 may be separably coupled to the aerosol-generating device main body 200.

The embodiment in which the connection unit 2610 is connected to the battery pack 250 and the connector cover 2620 is connected to the aerosol-generating device main body 200 is illustrated, but is not limited thereto. That is, the connection unit 2610 may be connected to the aerosol-generating device main body 200, and the connector cover 2620 may be connected to the battery pack 250.

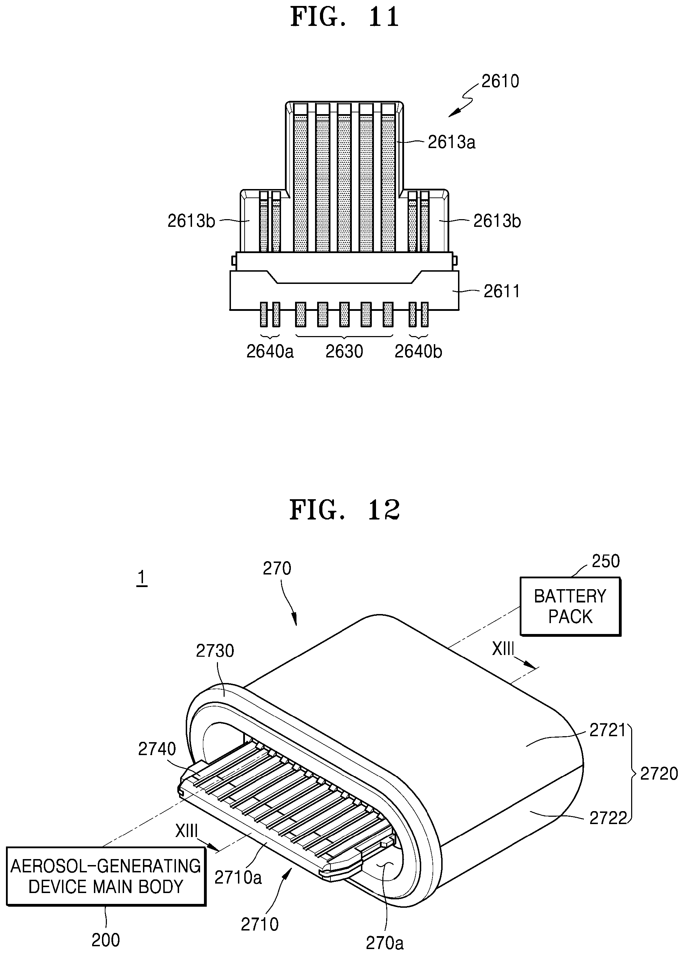

FIG. 11 is a bottom view of a connector shown in FIG. 10.

Referring to FIG. 11, the connection unit 2610 may include the insulating member 2611, the support member 2613, a first contact 2630, a second contact 2640a, and a third contact 2640b.

The first contact 2630, the second contact 2640a, and the third contact 2640b may be electrically connected to a battery terminal and a main body terminal. The first contact 2630, the second contact 2640a, and the third contact 2640b may be manufactured together with the insulating member 2611 and the support member 2613 in an insert injection process.

The insert injection process may refer to a process of injecting a resin into a cavity while a separate material such as a metal is previously inserted into the cavity. Through an insert injection process, a product in which a metal and a resin (e.g., rubber) are combined may be manufactured. In other words, the connection unit 2610 may be finally manufactured by placing the first contact 2630, the second contact 2640a, and the third contact 2640b including metallic materials in the cavity, and then injecting materials of the insulating member 2611 and the support member 2613 into the cavity.

The first contact 2630, the second contact 2640a, and the third contact 2640b may perform different functions.

In an embodiment, the first contact 2630 may perform a function of supplying power from a battery pack to an aerosol-generating device main body. In this case, the second contact 2640a and the third contact 2640b may perform a function for communication between the battery pack and the aerosol-generating device main body.

In another embodiment, the first contact 2630 may perform the function for communication between the battery pack and the aerosol-generating device main body. In this case, the second contact 2640a and the third contact 2640b may perform the function of supplying power from the battery pack to the aerosol-generating device main body.

The first contact 2630 may be disposed on a first support block 2613a. The first support block 2613a may be a region of the support member 2613 of FIG. 10 and located inside a second support block 2613b. The first contact 2630 may be formed to have a length longer than those of the second contact 2640a and the third contact 2640b. A plurality of first contacts 2630 may be disposed on the first support block 2613a. FIG. 11 shows five first contacts 2630, but this is exemplary, and one to four or less or six or more first contacts 2630 may be disposed on the first support block 2613a.

The second contact 2640a and the third contact 2640b may be disposed on the second support block 2613b with the first contact 2630 disposed therebetween. Each of the second contact 2640a and the third contact 2640b may be disposed in plural on the second support block 2613b. FIG. 11 shows two second contacts 2640a and third contacts 2640b, but this is exemplary, and one or three or more second contacts 2640a and third contacts 2640b may be disposed on the second support block 2613b.

FIG. 12 is a diagram illustrating another example of a connector connecting a battery pack to an aerosol-generating device main body.

Referring to FIG. 12, the aerosol-generating device 1 may include the aerosol-generating device main body 200, the battery pack 250, and a connector 270. The aerosol-generating device main body 200 shown in FIG. 12 is the same as or similar to the aerosol-generating device main body 200 described with reference to FIGS. 1 to 6, and the battery pack 250 shown in FIG. 12 may be the same as or similar to the battery pack 250 described with reference to FIGS. 1 to 6, and thus redundant descriptions thereof will be omitted.

The connector 270 may electrically connect the aerosol-generating device main body 200 to the battery pack 250. The connector 270 may be included in the aerosol-generating device 1 as an independent module, and may be included in the aerosol-generating device 1 as a module integrated with at least one of the aerosol-generating device main body 200 or the battery pack 250.

The connector 270 may be inserted into one region of the aerosol-generating device main body 200 while connected to the battery pack 250. The connector 270 may be inserted into the one region of the aerosol-generating device main body 200 and electrically connected to a main body terminal. Accordingly, the connector 270 may electrically connect the battery pack 250 to the aerosol-generating device main body 200.

However, this is exemplary, and unlike FIG. 12, the connector 270 may be inserted into one region of the battery pack 250 while connected to the aerosol-generating device main body 200. That is, the connector 270 may be inserted into the one region of the battery pack 250 and electrically connected to a battery terminal. Accordingly, the connector 270 may electrically connect the battery pack 250 to the aerosol-generating device main body 200.

The connector 270 may include an insulating member 2710, a connector cover 2720, a sealing member 2730, and a contact 2740.

The insulating member 2710 may support the contact 2740. The insulating member 2710 may include a protruding portion 2710a protruding outward from an insertion hole 270a. Although not shown, the protruding part 2710a of the insulating member 2710 may be located inside the insertion hole 270a. The insulating member 2710 may include an insulating material. For example, the insulating member 2710 may include a material such as rubber.

The connector cover 2720 may be disposed to surround the insulating member 2710. The connector cover 2720 may perform a function of protecting the component (e.g., the insulating member 2710 or the contact 2740) of the connector 270 located inside.

The connector cover 2720 may include a first cover 2721 and a second cover 2722 which are separably coupled to each other.

The sealing member 2730 may perform a waterproof function. Specifically, in an embodiment in which the connector 270 is inserted into the aerosol-generating device main body 200, the sealing member 2730 may seal between the aerosol-generating device main body 200 and the connector 270. Accordingly, the sealing member 2730 may prevent foreign substances such as moisture from penetrating into the insertion hole 270a, thereby reducing a possibility of damage to the component such as the contact 2740.

In addition, in an embodiment where the connector 270 is inserted into the battery pack 250, the sealing member 2730 may seal between the battery pack 250 and the connector 270. Accordingly, the sealing member 2730 may prevent foreign substances such as moisture from penetrating into the insertion hole 270a, thereby reducing the possibility of damage to the component such as the contact 2740.

The sealing member 2730 may be located in a front end of the connector cover 2720. The sealing member 2730 may include a material such as rubber.

The contact 2740 may connect the main body terminal to the battery terminal. The contact 2740 may be connected to the main body terminal while connected to the battery terminal, thereby electrically connecting the battery to the aerosol-generating device main body. The contact 2740 may include a material having conductivity. For example, contact 2740 may include at least one of copper (Cu), aluminum (Al), gold (Au), or silver (Ag), and the contact 2740 may be plated with gold or silver material.

One region of the aerosol-generating device main body 200 may be inserted into the insertion hole 270a formed between the connector cover 2720 and the insulating member 2710. When one region of the aerosol-generating device main body 200 is inserted into the insertion hole 270a, the main body terminal may contact the contact 2740, and as a result, the main body terminal and the battery terminal may be electrically connected to each other.

The contact 2740 may be disposed on the insulating member 2710. A plurality of contacts 2740 may be spaced apart from each other on the insulating member 2710.

Hereinafter, a structure of the connector shown in FIG. 12 will be described in detail.

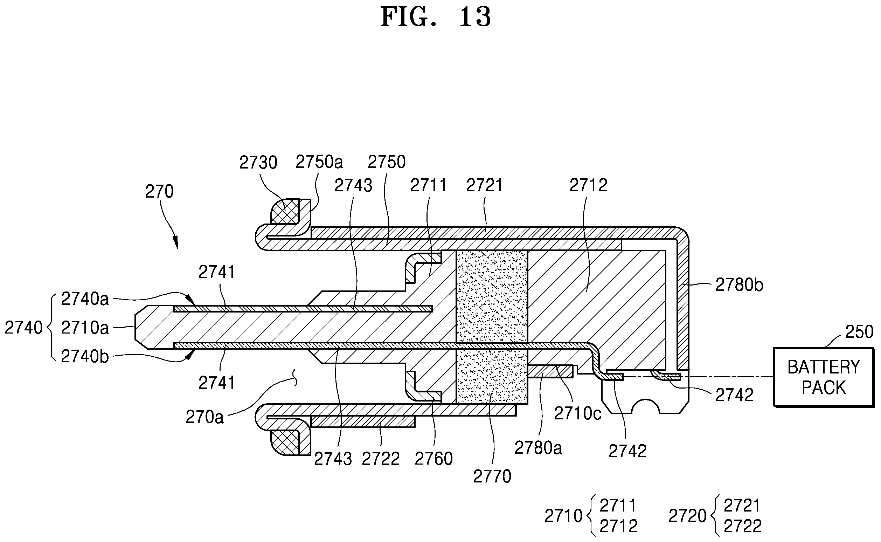

FIG. 13 is a cross-sectional view of a connector taken along line XIII-XIII of FIG. 12.

Referring to FIG. 13, the connector 270 may include the insulating member 2710, the connector cover 2720, the sealing member 2730, the contact 2740, a connector shell 2750, a limiting member 2760, a waterproof member 2770, a first covering member 2780a, and a second covering member 2780b.

The insulating member 2710 may support the contact 2740. The insulating member 2710 may be located inside the connector shell 2750 such that the protruding portion 2710a protrudes from a front end of the connector shell 2750.

The insulating member 2710 may include a first insulating member 2711 and a second insulating member 2712.

The first insulating member 2711 may support the contact 2740. A plurality of contacts 2740 may be coupled to the first insulating member 2711, and for example, the plurality of contacts 2740 may be coupled to one surface and the other surface of the first insulating member 2711, respectively.

The second insulating member 2712 may be located on the opposite side of the first insulating member 2711 with respect to the waterproof member 2770. The second insulating member 2712 may support the contact 2740.

The connector cover 2720 may be located outside the connector shell 2750. The connector cover 2720 may include a first cover 2721 surrounding one region of the connector shell 2750 and a second cover 2722 surrounding the other region of the connector shell 2750.

The sealing member 2730 may be coupled to the front end of the connector shell 2750. The front end of the connector shell 2750 may be a region of the connector shell 2750 facing the protruding portion 2710a of the insulating member 2710. The sealing member 2730 may have a circular ring shape as a whole.

The contact 2740 may be manufactured together with the insulating member 2710 in an insert molding process. The contact 2740 may include a first contact 2740a coupled to one side of the first insulating member 2711 and a second contact 2740b coupled to the other side of the first insulating member 2711. The first contact 2740a and the second contact 2740b may perform different functions.

Each of the first contact 2740a and the second contact 2740b may include a connection contact 2741, a mounting contact 2742, and a connection contact 2743.

The connection contact 2741 may be electrically connected to a main body terminal. The connection contact 2741 may be in contact with the main body terminal inserted into the insertion hole 270a. At least a part of the connection contact 2741 may be exposed to the outside from the first insulating member 2711.

The mounting contact 2742 may be electrically connected to the battery pack 250. At least a part of the mounting contact 2742 may be exposed to the outside from the second insulating member 2712.

The connection contact 2743 may connect the connection contact 2741 to the mounting contact 2742. At least a part of the connection contact 2743 may be inserted into the first insulating member 2711 and the second insulating member 2712.

The insulating member 2710 may be coupled to the connector shell 2750. The connector shell 2750 may be disposed between the insulating member 2710 and the connector cover 2720. The insulating member 2710 may be coupled to the connector shell 2750 such that the contacts 2740 are located inside the connector shell 2750 while coupled to each other.

The connector shell 2750 may include a support portion 2750a supporting the sealing member 2730. The support portion 2750a may be located in the front end of the connector shell 2750. The support portion 2750a may be formed by bending the front end of the connector shell 2750.

At least a part of the support portion 2750a may include a curved surface. Accordingly, in a process of coupling the connector 270 to the aerosol-generating device main body 200 or the battery pack 250, the possibility of damage to the connector 270 and the aerosol-generating device main body 200 or the battery pack 250 may be reduced.

The support portion 2750a may include a first part supporting one region of the sealing member 2730, and a second part connected to the first part and supporting one region of the sealing member 2730. The first part and the second part may be integrally formed, and may extend in different directions. For example, the first part may extend in a direction parallel to a direction in which the insulating member 2710 extends.

The limiting member 2760 may limit a distance by which one region of the aerosol-generating device main body 200 or one region of the battery pack 250 is inserted into the insertion hole 270a. The limit member 2760 may be located in a front end of the first insulating member 2711. In a process of inserting one region of the aerosol-generating device main body 200 or one region of the battery pack 250 into the insertion hole 270a, the limiting member 2760 may support one region of the aerosol-generating device main body 200 or one region of the battery pack 250. Therefore, the possibility of damage to the first insulating member 2711 may be reduced.

The waterproof member 2770 may implement a waterproof function by sealing between an outer surface of the insulating member 2710 and an inner surface of the connector shell 2750. The waterproof member 2770 may be formed to partially surround the contacts 2740, thereby implementing a waterproof function with respect to the contacts 2740. The waterproof member 2770 may be formed by applying a potting liquid to the inside of the connector shell 2750 and curing the potting liquid while the insulating member 2710 is inserted into the connector shell 2750.

The first covering member 2780a may be coupled to the connector cover 2720 and disposed to cover a lower surface 2710c of the insulating member 2710. Specifically, the first covering member 2780a may be coupled to the second cover 2722 and disposed to cover the lower surface 2710c of the second insulating member 2712. Accordingly, the first covering member 2780a may reduce the occurrence of radiation with respect to a signal toward the lower surface 2710c of the second insulating member 2712.

The second covering member 2780b may be coupled to the connector cover 2720 and disposed to cover a rear surface of the insulating member 2710. Specifically, the second covering member 2780b may be coupled to the first cover 2721 and disposed to cover a rear surface of the second insulating member 2712. Accordingly, the second covering member 2780b may reduce the occurrence of radiation with respect to a signal through the rear surface of the second insulating member 2712.

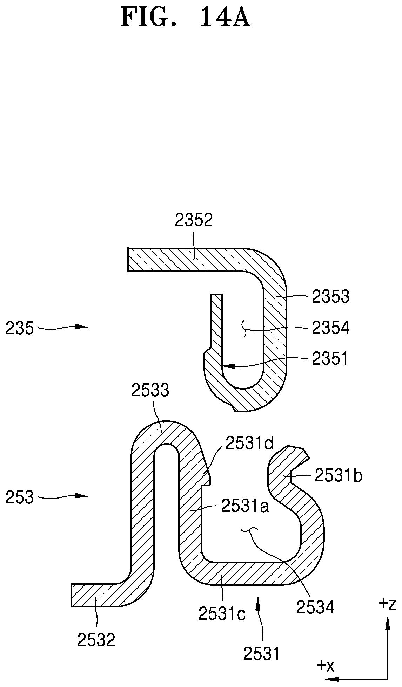

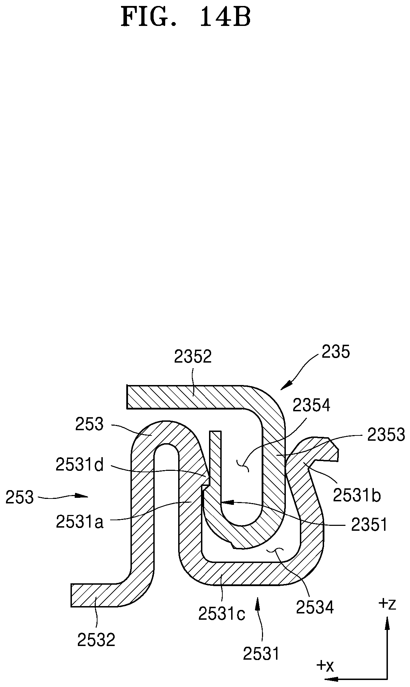

FIGS. 14A and 14B are diagrams illustrating a process of coupling a main body terminal and a battery terminal to each other.

FIG. 14A is a cross-sectional view illustrating a state before the main body terminal and the battery terminal are coupled to each other.

Referring to FIG. 14A, the main body terminal 235 may include a first connection member 2351, a first mounting member 2352, a first connecting member 2353, and a first elastic groove 2354.

The first connection member 2351 may be in contact with the battery terminal 253 to be electrically connected to the battery terminal 253. The first connection member 2351 may be connected to the first connecting member 2353 so as to elastically move toward the first elastic groove 2354 in a process of contacting the battery terminal 253. The first connection member 2351 may have a "U" shape as a whole.

The first mounting member 2352 may be electrically connected to an aerosol-generating device main body. For example, the first mounting member 2352 may be mounted on a PCB substrate of the aerosol-generating device main body.

The first connecting member 2353 may electrically connect the first connection member 2351 to the first mounting member 2352. The first connecting member 2353, the first connection member 2351, and the first mounting member 2352 may be integrally formed.

The first elastic groove 2354 may be a space formed between the first connection member 2351 and the first connecting member 2353. The first elastic groove 2354 may be a space for the first connection member 2351 to elastically move.

Referring to FIG. 14A, the battery terminal 253 may include a second connection member 2531, a second mounting member 2532, a second connecting member 2533, and a second elastic groove 2534.

The second connection member 2531 may be in contact with the main body terminal 235 to be electrically connected to the main body terminal 235. Specifically, the second connection member 2531 may be in contact with the first connection member 2351. The second connection member 2531 may be connected to the second connecting member 2533 so as to move elastically in a process of contacting the main body terminal 235. The second connection member 2531 may have a "U" shape as a whole.

The second connection member 2531 may include a 2-1 connection member 2531a, a 2-2 connection member 2531b, a 2-3 connection member 2531c, and a locking terminal 2531d.

The 2-1 connection member 2531a may be in contact with one side surface (e.g., a surface facing the +x direction) of the first connection member 2351. The 2-1 connection member 2531a may be connected to the second connecting member 2533.

The 2-2 connection member 2531b may be in contact with the other side surface (e.g., a surface facing the -x direction) of the first connection member 2351. According to an embodiment, contact reliability between the battery terminal 253 and the main body terminal 235 may be improved through a so-called both-end contact structure using the 2-1 connection member 2531a and the 2-2 connection member 2531b.

The 2-2 connection member 2531b may be connected to the 2-3 connection member 2532c so as to elastically move in one direction (e.g., the -x direction) in a process of contacting the first connection member 2351. Accordingly, the space size between the 2-2 connection member 2531b and the 2-1 connection member 2531a is increased, and thus the main body terminal 235 may be easily coupled to the battery terminal 253.

The 2-3 connection member 2531c may electrically connect the 2-1 connection member 2531a to the 2-2 connection member 2531b. The 2-3 connection member 2531c, the 2-1 connection member 2531a, and the 2-2 connection member 2531b may be integrally formed.

The locking terminal 2531d may protrude from the 2-1 connection member 2531a toward the second elastic groove 2534. The locking terminal 2531d may be integrally formed with the 2-1 connection member 2531a.

The second mounting member 2532 may be electrically connected to a battery. For example, the second mounting member 2532 may be mounted on a PCB substrate of a battery pack.

The second connecting member 2533 may electrically connect the second connection member 2531 to the second mounting member 2532. The second connecting member 2533, the second connection member 2531, and the second mounting member 2532 may be integrally formed. The second connecting member 2533 may be formed in an inverted "U" shape as a whole.

The second elastic groove 2534 may be a space formed between the 2-1 connection member 2531a and the 2-2 connection member 2531b. At least a part (e.g., the first connection member 2351) of the main body terminal 235 may be inserted into the second elastic groove 2534. The second elastic groove 2534 may be a space for the 2-2 connection member 2531b to elastically move.

In the above, an embodiment in which the main body terminal 235 includes the first connection member 2351, the first mounting member 2352, the first connecting member 2353, and the first elastic groove 2354 and the battery terminal 253 includes the second connection member 2531, the second mounting member 2532, the second connecting member 2533, and the second elastic groove 2534 has been described, but the disclosure not limited thereto. That is, the main body terminal 235 may include the second connection member 2531, the second mounting member 2532, the second connecting member 2533, and the second elastic groove 2534, and the battery terminal 253 may include the first connection member 2351, the first mounting member 2352, the first connecting member 2353, and the first elastic groove 2354.

FIG. 14B is a cross-sectional view illustrating a state after the main body terminal and the battery terminal are coupled to each other.

Referring to FIG. 14B, the first connection member 2351 may be inserted into the second elastic groove 2534 in a process of coupling the main body terminal 235 and the battery terminal 253 to each other. In this regard, the first connection member 2351 may elastically move toward the first elastic groove 2354. Therefore, the size of the first elastic groove 2354 may decrease. In addition, the 2-2 connection member 2531b may move elastically in one direction (e.g., the -x direction) in a process of contacting the first connection member 2351. Therefore, the size of the second elastic groove 2534 may increase. That is, as the size of the first elastic groove 2354 decreases, the size of the second elastic groove 2534 increases, and thus the first connection member 2351 may be easily inserted into the second elastic groove 2534 and, as a result, may be easily in contact with the second connection member 2531.

Meanwhile, the 2-1 connection member 2531a may be in contact with one side surface (e.g., the surface facing the +x direction) of the first connection member 2351, and the 2-2 connection member 2531b may be in contact with the other side surface (e.g., the surface facing the -x direction) of the first connection member 2351. Therefore, the contact reliability between the battery terminal 253 and the main body terminal 235 may be improved through the so-called two-end contact structure.

When the first connection member 2351 is completely inserted into the second elastic groove 2534, the locking terminal 2531d may support one region (a protruding portion) of the first connection member 2351. Therefore, the first connection member 2351 is supported by the locking terminal 2531d and its movement is limited, and thus the coupling force between the first connection member 2351 and the second connection member 2531 may be improved.

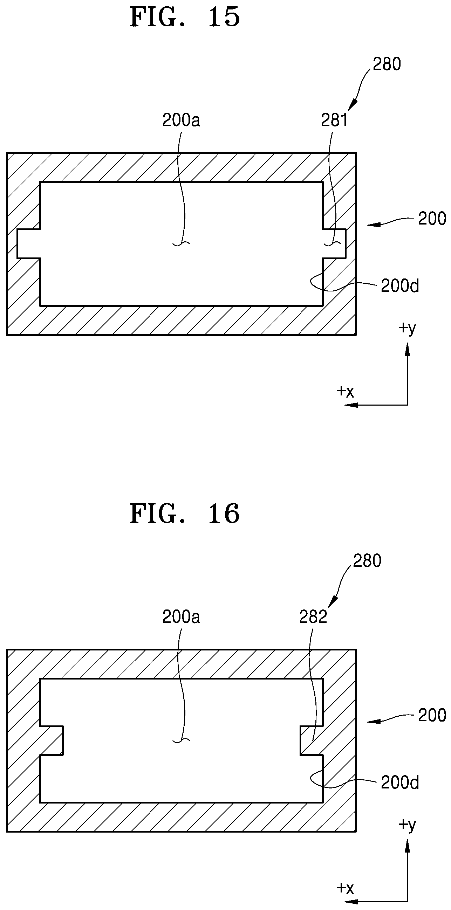

FIG. 15 is a cross-sectional view of an aerosol-generating device main body with respect to an XV-XV cross-sectional line of FIG. 6 for explaining an example of a guide portion.

Referring to FIG. 15, the aerosol-generating device main body 200 may include a guide portion 280. The aerosol-generating device main body 200 shown in FIG. 15 may be any one of the aerosol-generating device bodies 200 described with reference to FIGS. 1 to 6.

In addition, at least one of the components of the aerosol-generating device main body 200 is the same as or similar to that described above, and thus redundant descriptions thereof will be omitted.

The guide portion 280 may guide the movement of a battery pack so that the battery pack is easily inserted into the battery accommodation portion 200a.

In an embodiment, the guide portion 280 may include a guide groove 281 formed in an inner surface 200d of the aerosol-generating device main body 200 facing the battery accommodation portion 200a.

The guide grooves 281 may extend together in a direction in which the aerosol-generating device main body 200 extends. A plurality of guide grooves 281 may be formed along a circumferential direction of the aerosol-generating device main body 200.

When the aerosol-generating device main body 200 includes the guide groove 281, although not shown, the battery pack may include a guide protrusion inserted into the guide groove 281. The guide protrusion may be formed on an outer surface of a battery pack main body, and may extend together in the direction in which the aerosol-generating device main body 200 extends. The battery pack may include the same number of guide protrusions as the guide groove 281.

In a process of inserting the battery pack into the battery accommodation portion 200a, the guide protrusion of the battery pack may be inserted into the guide groove 281 of the aerosol-generating device main body 200, and thus the movement of the battery pack may be easily guided in the battery accommodation portion 200a. Accordingly, the battery pack may be easily coupled to the aerosol-generating device main body 200.

FIG. 16 is a cross-sectional view of an aerosol-generating device main body with respect to the XV-XV cross-sectional line of FIG. 6 for explaining another example of a guide portion.

Referring to FIG. 16, the aerosol-generating device main body 200 may include the guide portion 280. The aerosol-generating device main body 200 shown in FIG. 16 may be any one of the aerosol-generating device bodies 200 described with reference to FIGS. 1 to 6.

In addition, at least one of the components of the aerosol-generating device main body 200 is the same as or similar to that described above, and thus redundant descriptions thereof will be omitted.

The guide portion 280 may guide the movement of a battery pack so that the battery pack is easily inserted into the battery accommodation portion 200a.

In an embodiment, the guide portion 280 may include a guide protrusion 282 protruding from the inner surface 200d of the aerosol-generating device main body 200 facing the battery accommodation portion 200a.

The guide protrusion 282 may extend together in a direction in which the aerosol-generating device main body 200 extends. A plurality of guide protrusions 282 may be formed along a circumferential direction of the aerosol-generating device main body 200. The guide protrusion 282 may be integrally formed with the aerosol-generating device main body 200.

When the aerosol-generating device main body 200 includes the guide protrusion 282, although not shown, the battery pack may include a guide groove into which the guide protrusion 282 is inserted. The guide groove may be formed in an outer surface of a battery pack main body, and may extend together in a direction in which the battery pack extends. The battery pack may include the same number of guide grooves as the guide protrusions 282.

In a process of inserting the battery pack into the battery accommodation portion 200a, the guide protrusion 282 of the aerosol-generating device main body 200 may be inserted into the guide groove of the battery pack, and thus the movement of the battery pack may be easily guided in the battery accommodation portion 200a. Accordingly, the battery pack may be easily coupled to the aerosol-generating device main body 200.

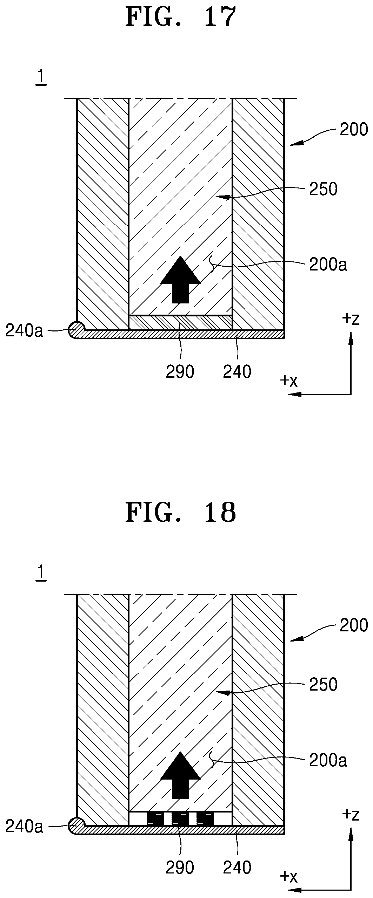

FIG. 17 is a schematic front cross-sectional view of an aerosol-generating device for explaining an example of a pressing member.

Referring to FIG. 17, the aerosol-generating device 1 may include the aerosol-generating device main body 200, the battery cover 240, the battery pack 250, and a pressing member 290. The aerosol-generating device main body 200 shown in FIG. 17 may be any one of the aerosol-generating device bodies 200 described with reference to FIGS. 1 to 6, and the battery pack 250 shown in FIG. 17 may be any one of the battery packs 250 described with reference to FIGS. 1 to 6.

In addition, at least one of the components of the aerosol-generating device 1 is the same as or similar to that described above, and thus redundant descriptions thereof will be omitted.

The pressing member 290 may press the battery pack 250 accommodated in the battery accommodation portion 200a to the aerosol-generating device main body 200. For example, the pressing member 290 may press the battery pack 250 toward a main body terminal of the aerosol-generating device main body 200. Accordingly, a coupling force between the main body terminal and a battery terminal may be improved, and thus contact reliability between the main body terminal and the battery terminal may be improved.

In addition, the pressing member 290 may press the battery pack 250 toward a connector. Accordingly, the coupling force between the battery pack 250 and the connector and between the connector and the aerosol-generating device main body 200 may be improved.

The pressing member 290 may protrude from one side of the battery cover 240. Accordingly, when the battery cover 240 rotates with respect to the hinge 240a to seal the battery accommodation portion 200a, the pressing member 290 may press the battery pack 250. For example, the pressing member 290 may include a material such as rubber, but is not limited thereto.

FIG. 18 is a schematic front cross-sectional view of an aerosol-generating device for explaining another example of a pressing member.

Referring to FIG. 18, the aerosol-generating device 1 may include the aerosol-generating device main body 200, the battery cover 240, the battery pack 250, and the pressing member 290. The aerosol-generating device main body 200 shown in FIG. 18 may be any one of the aerosol-generating device bodies 200 described with reference to FIGS. 1 to 6, and the battery pack 250 shown in FIG. 18 may be any one of the battery packs 250 described with reference to FIGS. 1 to 6.

In addition, at least one of the components of the aerosol-generating device 1 is the same as or similar to that described above, and thus redundant descriptions thereof will be omitted.

The pressing member 290 may include a material having elasticity. For example, the pressing member 290 may be a spring. The pressing member 290 may be coupled to one side of the battery cover 240. Accordingly, when the battery cover 240 rotates with respect to the hinge 240a to seal the battery accommodation portion 200a, the pressing member 290 may press the battery pack 250 by using an elastic force. A plurality of pressing members 290 may be coupled to the battery cover 240.

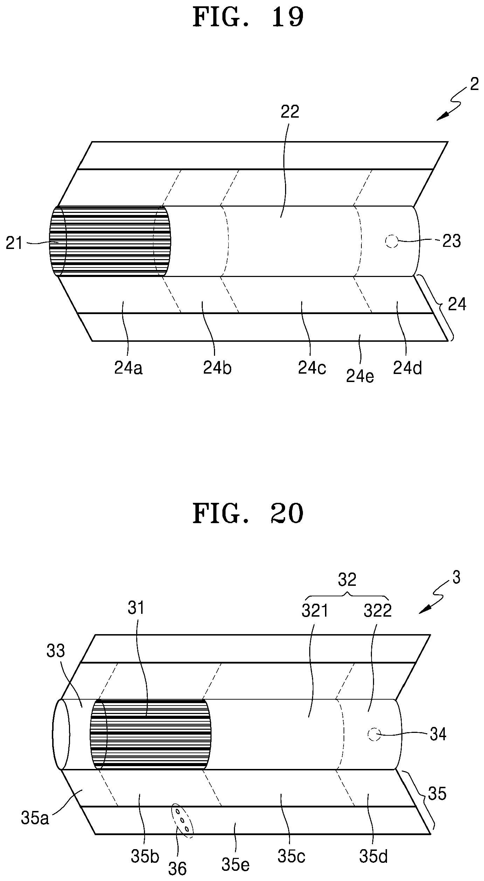

Hereinafter, examples of the aerosol-generating article 2 will be described with reference to FIGS. 19 and 20.

FIGS. 19 and 20 are diagrams illustrating examples of an aerosol-generating article according to an embodiment.

Referring to FIG. 19, the aerosol-generating article 2 includes a tobacco rod 21 and a filter rod 22.

FIG. 19 illustrates that the filter rod 22 includes a single segment, but is limited thereto. In other words, the filter rod 22 may include a plurality of segments. For example, the filter rod 22 may include a first segment configured to cool an aerosol and a second segment configured to filter a certain component included in the aerosol. In addition, as necessary, the filter rod 22 may further include at least one segment configured to perform other functions.

The aerosol-generating article 2 may be packaged by at least one wrapper 24. The wrapper 24 may have at least one hole through which external air may be introduced or internal air may be discharged. For example, the aerosol-generating article 2 may be packaged by one wrapper 24. As another example, the aerosol-generating article 2 may be doubly packaged by two or more wrappers 24. For example, the tobacco rod 21 may be packaged by a first wrapper 24a, and the filter rod 22 may be packaged by wrappers 24b, 24c, and 24d. In addition, the entire aerosol-generating article 2 may be re-packaged by a single wrapper 24e. When the filter rod 22 includes a plurality of segments, the plurality of segments may be respectively packaged by the wrappers 24b, 24c, and 24d.

The tobacco rod 21 may include an aerosol-generating material. For example, the aerosol-generating material may include at least one of glycerin, propylene glycol, ethylene glycol, dipropylene glycol, diethylene glycol, triethylene glycol, tetraethylene glycol, or oleyl alcohol, but is not limited thereto. In addition, the tobacco rod 21 may include other additives, such as flavors, a wetting agent, and/or organic acid. In addition, the tobacco rod 21 may include a flavored liquid, such as menthol or a moisturizer, which is injected to the tobacco rod 21.

The tobacco rod 21 may be manufactured in various ways. For example, the tobacco rod 21 may be formed as a sheet or a strand. In addition, the tobacco rod 21 may be formed as a pipe tobacco, which is formed of tiny bits cut from a tobacco sheet. In addition, the tobacco rod 21 may be surrounded by a heat conductive material. For example, the heat conductive material may be a metal foil such as aluminum foil, but is not limited thereto. For example, the heat conductive material surrounding the tobacco rod 21 may uniformly distribute heat transferred to the tobacco rod 21, and thus, the heat conductivity applied to the tobacco rod may be increased, which may improve the taste of tobacco. In addition, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Meanwhile, the shape of the filter rod 22 is not limited. For example, the filter rod 22 may include a cylinder-type rod or a tube-type rod having a hollow inside. In addition, the filter rod 22 may include a recess-type rod. When the filter rod 22 includes a plurality of segments, at least one of the plurality of segments may have a different shape.

The filter rod 22 may be formed to generate flavors. For example, a flavoring liquid may be injected onto the filter rod 22, or an additional fiber coated with the flavoring liquid may be inserted into the filter rod 22.

In addition, the filter rod 22 may include at least one capsule 23. Here, the capsule 23 may generate a flavor or an aerosol. For example, the capsule 23 may have a structure in which a liquid including a flavoring material is wrapped with a film. For example, the capsule 23 may have a spherical or cylindrical shape, but is not limited thereto.

When the filter rod 22 includes a segment configured to cool the aerosol, the cooling segment may include a polymer material or a biodegradable polymer material. For example, the cooling segment may include pure polylactic acid alone, but is not limited thereto. Alternatively, the cooling segment may include a cellulose acetate filter having a plurality of holes. However, the cooling segment is not limited to the above-described example and is not limited as long as the cooling segment cools the aerosol.

Referring to FIG. 20, an aerosol-generating article 3 may further include a front-end plug 33. The front-end plug 33 may be located on one side of the tobacco rod 31 which is opposite to the filter rod 32. The front-end plug 33 may prevent the tobacco rod 31 from being detached outwards and prevent the liquefied aerosol from flowing from the tobacco rod 31 into an aerosol-generating device during smoking.

The filter rod 32 may include a first segment 321 and a second segment 322. Here, the first segment 321 may correspond to a first segment of the filter rod 22 of FIG. 19, and the second segment 322 may correspond to a second segment of the filter rod 22 of FIG. 19.

A diameter and a total length of the aerosol-generating article 3 may correspond to a diameter and a total length of the aerosol-generating article 2 of FIG. 19. For example, the length of The front-end plug 33 is about 7 mm, the length of the tobacco rod 31 is about 15 mm, the length of the first segment 321 is about 12 mm, and the length of the second segment 322 is about 14 mm, but the disclosure is not limited thereto.

The aerosol-generating article 3 may be packaged using at least one wrapper 35. The wrapper 35 may have at least one hole through which external air may be introduced or internal air may be discharged. For example, the front-end plug 33 may be packaged by a first wrapper 35a, the tobacco rod 31 may be packaged by a second wrapper 35b, the first segment 321 may be packaged by a third wrapper 35c, and the second segment 322 may be packaged by a fourth wrapper 35d.

Further, the entire aerosol-generating article 3 may be repackaged by a fifth wrapper 35e. In addition, at least one perforation 36 may be formed in the fifth wrapper 35e. For example, the perforation 36 may be formed in a region surrounding the tobacco rod 31, but is not limited thereto. The perforation 36 may serve to transfer heat generated by a heater to the inside of the tobacco rod 31.

In addition, at least one capsule 34 may be included in the second segment 322. Here, the capsule 34 may generate a flavor or an aerosol. For example, the capsule 34 may have a structure in which a liquid including a flavoring material is wrapped with a film. For example, the capsule 34 may have a spherical or cylindrical shape, but is not limited thereto.

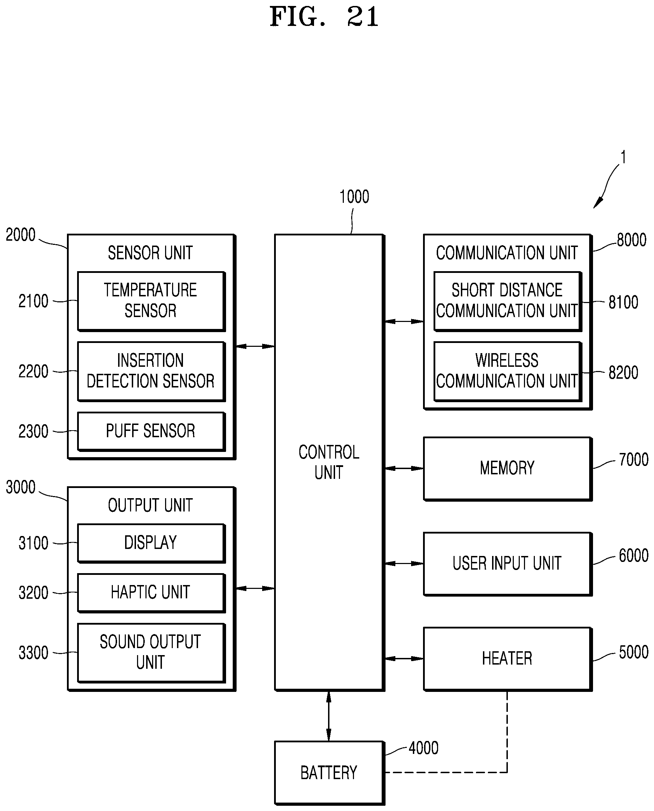

FIG. 21 is a block diagram of an aerosol generating device according to another embodiment.

The aerosol generating device 1 may include a controller 1000, a sensing unit 2000, an output unit 3000, a battery 4000, a heater 5000, a user input unit 6000, a memory 7000, and a communication unit 8000. However, the internal structure of the aerosol generating device 1 is not limited to those illustrated in FIG. 21. That is, according to the design of the aerosol generating device 1, it will be understood by one of ordinary skill in the art that some of the components shown in FIG. 21 may be omitted or new components may be added.

The sensing unit 2000 may sense a state of the aerosol generating device 1 and a state around the aerosol generating device 1, and transmit sensed information to the controller 1000. Based on the sensed information, the controller 1000 may control the aerosol generating device 1 to perform various functions, such as controlling an operation of the heater 5000, limiting smoking, determining whether an aerosol generating article (e.g., a cigarette, a cartridge, or the like) is inserted, displaying a notification, or the like.

The sensing unit 2000 may include at least one of a temperature sensor 2100, an insertion detection sensor 2200, and a puff sensor 2300, but is not limited thereto.

The temperature sensor 2100 may sense a temperature at which the heater 5000 (or an aerosol generating material) is heated. The aerosol generating device 1 may include a separate temperature sensor for sensing the temperature of the heater 5000, or the heater 5000 may serve as a temperature sensor. Alternatively, the temperature sensor 2100 may also be arranged around the battery 4000 to monitor the temperature of the battery 4000.

The insertion detection sensor 2200 may sense insertion and/or removal of an aerosol generating article. For example, the insertion detection sensor 2200 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 2300 may sense a user's puff on the basis of various physical changes in an airflow passage or an airflow channel. For example, the puff sensor 2300 may sense a user's puff on the basis of any one of a temperature change, a flow change, a voltage change, and a pressure change.

The sensing unit 2000 may include, in addition to the temperature sensor 2100, the insertion detection sensor 2200, and the puff sensor 2300 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 3000 may output information on a state of the aerosol generating device 1 and provide the information to a user. The output unit 3000 may include at least one of a display unit 3100, a haptic unit 3200, and a sound output unit 3300, but is not limited thereto. When the display unit 3100 and a touch pad form a layered structure to form a touch screen, the display unit 3100 may also be used as an input device in addition to an output device.

The display unit 3100 may visually provide information about the aerosol generating device 1 to the user. For example, information about the aerosol generating device 1 may mean various pieces of information, such as a charging/discharging state of the battery 4000 of the aerosol generating device 1, a preheating state of the heater 5000, an insertion/removal state of an aerosol generating article, or a state in which the use of the aerosol generating device 1 is restricted (e.g., sensing of an abnormal object), or the like, and the display unit 3100 may output the information to the outside. The display unit 3100 may be, for example, a liquid crystal display panel (LCD), an organic light-emitting diode (OLED) display panel, or the like. In addition, the display unit 3100 may be in the form of a light-emitting diode (LED) light-emitting device.

The haptic unit 3200 may tactilely provide information about the aerosol generating device 1 to the user by converting an electrical signal into a mechanical stimulus or an electrical stimulus. For example, the haptic unit 3200 may include a motor, a piezoelectric element, or an electrical stimulation device.

The sound output unit 3300 may audibly provide information about the aerosol generating device 1 to the user. For example, the sound output unit 3300 may convert an electrical signal into a sound signal and output the same to the outside.

The battery 4000 may supply power used to operate the aerosol generating device 1. The battery 4000 may supply power such that the heater 5000 may be heated. In addition, the battery 4000 may supply power required for operations of other components (e.g., the sensing unit 2000, the output unit 3000, the user input unit 6000, the memory 7000, and the communication unit 8000) in the aerosol generating device 1. The battery 4000 may be a rechargeable battery or a disposable battery. For example, the battery 4000 may be a lithium polymer (LiPoly) battery, but is not limited thereto.

The heater 5000 may receive power from the battery 4000 to heat an aerosol generating material. Although not illustrated in FIG. 21, the aerosol generating device 1 may further include a power conversion circuit (e.g., a direct current (DC)/DC converter) that converts power of the battery 4000 and supplies the same to the heater 5000. In addition, when the aerosol generating device 1 generates aerosols in an induction heating method, the aerosol generating device 1 may further include a DC/alternating current (AC) that converts DC power of the battery 4000 into AC power.

The controller 1000, the sensing unit 2000, the output unit 3000, the user input unit 6000, the memory 7000, and the communication unit 8000 may each receive power from the battery 4000 to perform a function. Although not illustrated in FIG. 21, the aerosol generating device 1 may further include a power conversion circuit that converts power of the battery 4000 to supply the power to respective components, for example, a low dropout (LDO) circuit, or a voltage regulator circuit.

In an embodiment, the heater 5000 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 5000 may be implemented by a metal wire, a metal plate on which an electrically conductive track is arranged, a ceramic heating element, or the like, but is not limited thereto.

In another embodiment, the heater 5000 may be a heater of an induction heating type. For example, the heater 5000 may include a suspector that heats an aerosol generating material by generating heat through a magnetic field applied by a coil.

The user input unit 6000 may receive information input from the user or may output information to the user. For example, the user input unit 6000 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 21, the aerosol generating device 1 may further include a connection interface, such as a universal serial bus (USB) interface, and may connect to other external devices through the connection interface, such as the USB interface, to transmit and receive information, or to charge the battery 4000.

The memory 7000 is a hardware component that stores various types of data processed in the aerosol generating device 1, and may store data processed and data to be processed by the controller 1000. The memory 7000 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 7000 may store an operation time of the aerosol generating device 1, the maximum number of puffs, the current number of puffs, at least one temperature profile, data on a user's smoking pattern, etc.

The communication unit 8000 may include at least one component for communication with another electronic device. For example, the communication unit 8000 may include a short-range wireless communication unit 8100 and a wireless communication unit 8200.

The short-range wireless communication unit 8100 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 8200 may include a cellular network communication unit, an Internet communication unit, a computer network (e.g., local area network (LAN) or wide area network (WAN)) communication unit, or the like, but is not limited thereto. The wireless communication unit 8200 may also identify and authenticate the aerosol generating device 1 within a communication network by using subscriber information (e.g., International Mobile Subscriber Identifier (IMSI)).

The controller 1000 may control general operations of the aerosol generating device 1. In an embodiment, the controller 1000 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 1000 may control the temperature of the heater 5000 by controlling supply of power of the battery 4000 to the heater 5000. For example, the controller 1000 may control power supply by controlling switching of a switching element between the battery 4000 and the heater 5000. In another example, a direct heating circuit may also control power supply to the heater 5000 according to a control command of the controller 1000.

The controller 1000 may analyze a result sensed by the sensing unit 2000 and control subsequent processes to be performed. For example, the controller 1000 may control power supplied to the heater 5000 to start or end an operation of the heater 5000 on the basis of a result sensed by the sensing unit 2000. As another example, the controller 1000 may control, based on a result sensed by the sensing unit 2000, an amount of power supplied to the heater 5000 and the time the power is supplied, such that the heater 5000 may be heated to a certain temperature or maintained at an appropriate temperature.

The controller 1000 may control the output unit 3000 on the basis of a result sensed by the sensing unit 2000. For example, when the number of puffs counted through the puff sensor 2300 reaches a preset number, the controller 1000 may notify the user that the aerosol generating device 1 will soon be terminated through at least one of the display unit 3100, the haptic unit 3200, and the sound output unit 3300.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

The embodiments of the present disclosure described above, or other embodiments, are not mutually exclusive or distinct from each other. The embodiments of the present disclosure described above, or other embodiments, may be used in combination or have their respective configurations or functions integrated.

For example, this means that the A configuration described in a particular embodiment and/or drawing may be combined with the B configuration described in another embodiment and/or drawing. That is, even if a combination of configurations is not explicitly described, it means that the combination is possible unless it is explicitly stated that such a combination is impossible.

The above detailed description should not be construed as limiting in any way but should be considered as illustrative. The scope of the present invention should be determined by the reasonable interpretation of the appended claims, and all modifications within the equivalent scope of the present invention are included in the scope of the present invention.

## Claims

1. An aerosol-generating device generating an aerosol, the aerosol-generating device comprising:
a battery pack comprising a battery configured to supply power for an operation of the aerosol-generating device and a battery terminal electrically connected to the battery;
an aerosol-generating device main body comprising a battery accommodation portion accommodating the battery pack and a main body terminal electrically connected to the battery terminal, and to which the battery pack is separably coupled; and
a connector configured to electrically connect the battery terminal to the main body terminal.

2. The aerosol-generating device of claim 1, wherein
the connector includes a battery port protruding from the battery pack and connected to the battery terminal, and a main body port including a groove into which the battery port is inserted and connected to the main body terminal, and
when the battery port is inserted into the main body port, the main body terminal and the battery terminal are electrically connected to each other.

3. The aerosol-generating device of claim 1, wherein
the connector includes a battery port connected to the battery terminal, a main body port connected to the main body terminal, and a connection unit configured to connect the battery port and the main body port to each other and including a bendable material.

4. The aerosol-generating device of claim 1, wherein
the connector includes a contact electrically connected to the main body terminal and the battery terminal, and a support member configured to support the contact.

5. The aerosol-generating device of claim 4, wherein
the support member includes a first support block disposed in a central region and a second support block disposed in a side surface of the first support block, and
the contact includes a first contact disposed on the first support block and a second contact disposed on the second support block.

6. The aerosol-generating device of claim 5, wherein
a length of the first contact is longer than a length of the second contact.

7. The aerosol-generating device of claim 1, wherein
the connector includes a contact electrically connected to the main body terminal and the battery terminal, an insulating member configured to support the contact, and a connector cover disposed to surround the contact and the insulating member.

8. The aerosol-generating device of claim 7, wherein
an insertion hole is formed between the connector cover and the insulating member, and
the insulating member includes a protrusion portion protruding outward from the insertion hole and on which the contact is disposed.

9. The aerosol-generating device of claim 7, wherein
the connector further includes a connector shell disposed between the insulating member and the connector cover, and a sealing member disposed on a front end of the connector shell.

10. The aerosol-generating device of claim 7, wherein
the contact includes a first contact disposed on one side of the insulating member and a second contact disposed on the other side of the insulating member.

11. The aerosol-generating device of claim 1, wherein
any one of the main body terminal or the battery terminal includes a first connection member connected to the other terminal, a first mounting member electrically connected to the first connection member, a first connecting member configured to connect the first connection member to the first mounting member, and a first elastic groove formed between the first connection member and the first connecting member such that the first connection member elastically moves.

12. The aerosol-generating device of claim 11, wherein
the other one of the main body terminal or the battery terminal includes a second connection member connected to both ends of the first connection member, a second mounting member electrically connected to the second connection member, a second connecting member configured to connect the second connection member to the second mounting member, and a second elastic groove formed between the second connection member and the second connecting member such that the second connection member elastically moves.

13. The aerosol-generating device of claim 1, further comprising:
a guide portion configured to guide a movement of the battery pack such that the battery pack is accommodated in the battery accommodation portion,
wherein the guide portion includes a guide protrusion disposed on any one of the aerosol-generating device main body or the battery pack, and a guide groove disposed in the other one of the aerosol-generating device main body or the battery pack and into which the guide protrusion is inserted.

14. The aerosol-generating device of claim 1, further comprising:
a battery cover rotatably coupled to the aerosol-generating device main body to cover at least a part of the battery accommodation portion.

15. The aerosol-generating device of claim 14, further comprising:
a pressing member configured to press the battery pack toward the aerosol-generating device main body when the battery cover is located to seal the battery accommodation portion.
